(19) Europäisches Patentamt / European Patent Office / Office européen des brevets

(11) **EP 3 992 965 B1**

(12) **EUROPEAN PATENT SPECIFICATION**

(45) Date of publication and mention of the grant of the patent:
**11.09.2024   Bulletin 2024/37**

(21) Application number: **20908929.1**

(22) Date of filing: **04.11.2020**

(51) International Patent Classification (IPC):
**G10L 21/0308** (2013.01)       **G10L 21/0272** (2013.01)
**G10L 21/028** (2013.01)        **G10L 25/12** (2013.01)
**G06N 3/084** (2023.01)          G06N 3/044 (2023.01)

(52) Cooperative Patent Classification (CPC):
**G10L 21/0308; G06N 3/084;** G06N 3/044

(86) International application number:
**PCT/CN2020/126475**

(87) International publication number:
**WO 2021/135628 (08.07.2021 Gazette 2021/27)**

(54) **VOICE SIGNAL PROCESSING METHOD AND SPEECH SEPARATION METHOD**

VERFAHREN ZUR SPRACHSIGNALVERARBEITUNG UND SPRACHTRENNVERFAHREN

PROCÉDÉ DE TRAITEMENT DE SIGNAL VOCAL ET PROCÉDÉ DE SÉPARATION DE LA VOIX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **02.01.2020   CN 202010003201**

(43) Date of publication of application:
**04.05.2022   Bulletin 2022/18**

(73) Proprietor: **Tencent Technology (Shenzhen) Company Limited**
**Shenzhen, Guangdong, 518057 (CN)**

(72) Inventors:
 • **WANG, Jun**
  **Shenzhen, Guangdong 518057 (CN)**
 • **LAM, Wing-yip**
  **Shenzhen, Guangdong 518057 (CN)**

(74) Representative: **Eisenführ Speiser**
**Patentanwälte Rechtsanwälte PartGmbB**
**Postfach 10 60 78**
**28060 Bremen (DE)**

(56) References cited:
CN-A- 110 390 950       CN-A- 110 459 240
CN-A- 111 179 962       CN-A- 111 341 341
US-A1- 2011 313 953      US-B1- 6 832 194

 • MAX W Y LAM ET AL: "Mixup-breakdown: a consistency training method for improving generalization of speech separation models", ARXIV.ORG, CORNELL UNIVERSITY LIBRARY, 201 OLIN LIBRARY CORNELL UNIVERSITY ITHACA, NY 14853, 28 October 2019 (2019-10-28), XP081522560
 • VIKAS VERMA ET AL: "Interpolation Consistency Training for Semi-Supervised Learning", ARXIV.ORG, CORNELL UNIVERSITY LIBRARY, 201 OLIN LIBRARY CORNELL UNIVERSITY ITHACA, NY 14853, 9 March 2019 (2019-03-09), XP081131463
 • XIANG HAO ET AL: "SNR-Based Teachers-Student Technique for Speech Enhancement", ARXIV.ORG, CORNELL UNIVERSITY LIBRARY, 201 OLIN LIBRARY CORNELL UNIVERSITY ITHACA, NY 14853, 29 October 2020 (2020-10-29), XP081802231, DOI: 10.1109/ICME46284.2020.9102846

**Description**

RELATED APPLICATION

The present disclosure claims priority to Chinese Patent Application No. 202010003201.2, entitled "METHOD FOR TRAINING SPEECH SEPARATION MODEL, AND METHOD AND APPARATUS FOR SPEECH SEPARATION" and filed on January 02, 2020.

FIELD OF THE TECHNOLOGY

The present disclosure relates to the field of speech technologies, and in particular to a method and an apparatus for processing speech signal, and a method and an apparatus for speech separation, a computer device, and a storage medium.

BACKGROUND OF THE DISCLOSURE

With development of artificial intelligence technologies and electronic devices, speech has become one of important means for human-machine interaction. Interfering sound sources renders correctness of speech recognition far from satisfactory when electronic devices are in a complex and open environment, because it is difficult to separate target speech from the interfering sound sources accurately. At present, it is a challenging task to develop a method for speech separation, which has excellent generalization performances and robustness in a complex and variable input environment.

An exemplary approach for speech separation is disclosed in MAX W Y LAM ET AL: "Mixup-breakdown: a consistency training method for improving generalization of speech separation models", ARXIV.ORG, CORNELL UNIVERSITY LIBRARY, 201 OLIN LIBRARY CORNELL UNIVERSITY ITHACA, NY 14853, 28 October 2019.

SUMMARY

A method and an apparatus for processing a speech signal, a method and an apparatus for speech separation, a computer device, and a storage medium are provided according to embodiments of the present disclosure. Technical solutions are as follows.

In one aspect, a method for processing a speech signal is provided. The method includes:

processing a mixed speech signal through a student model and a teacher model separately, where the mixed speech signal is generated by mixing a clean speech signal and an interfering signal and labelled with the clean speech signal, and a first model parameter of the teacher model is configured based on a second model parameter of the student model;

determining correctness information based on a signal outputted by the student model and the clean speech signal, where the correctness information is configured to represent a degree of separation correctness of the student model;

determining consistency information based on the signal outputted by the student model and a signal outputted by the teacher model, where the consistency information is configured to represent a degree of consistency between a first separation capability of the student model and a second separation capability of the teacher model; and

adjusting the first model parameter and the second model parameter based on multiple pieces of the correctness information and multiple pieces of the consistency information to obtain a speech separation model.

In an embodiment, determining the correctness information based on the signal outputted by the student model and the clean speech signal includes one of

determining the correctness information based on a first clean speech signal outputted by the student model and the clean speech signal, which serves as the label and is included in the mixed speech signal;

determining the correctness information based on a first interfering signal outputted by the student model and an interfering signal, which is included in the mixed speech signal and other than the clean speech signal; or

determining first correctness information based on a first clean speech signal outputted by the student model and the clean speech signal, which serves as the label and is included in the mixed speech signal; determining second correctness information based on a first interfering signal outputted by the student model and an interfering signal, which is included in the mixed speech signal and other than the clean speech signal; and determining the correctness information according to the first correctness information and the second correctness information.

In an embodiment, determining the consistency information based on the signal outputted by the student model and the signal outputted by the teacher model includes one of:

determining the consistency information based on a first clean speech signal outputted by the student model and a second clean speech signal outputted by the teacher model;

determining the consistency information based on a first interfering signal outputted by the student model and a second interfering signal outputted by the teacher model; or

determining first consistency information based on a first clean speech signal outputted by the student model and a second clean speech signal outputted by the teacher model; determining second consistency information based on a first interfering signal outputted by the student model and a second interfering signal outputted by the teacher model; and determining the consistency information according to the first consistency information and the second consistency information.

In an embodiment, determining the consistency information based on the first clean speech signal outputted by the student model and the second clean speech signal outputted by the teacher model includes:
determining the consistency information based on a short-term time-varying abstract feature of the first clean speech signal and a short-term time-varying abstract feature of the second clean speech signal.

In an embodiment, determining the consistency information based on the first clean speech signal outputted by the student model and the second clean speech signal outputted by the teacher model includes:

determining third consistency information based on a short-term time-varying abstract feature of the first clean speech signal and a short-term time-varying abstract feature of the second clean speech signal;

determining fourth consistency information based on the short-term time-varying abstract feature of the first clean speech signal and a long-term stable abstract feature of the second clean speech signal; and

determining the consistency information based on a sum of the third consistency information that is weighted and the fourth consistency information that is weighted.

In an embodiment, adjusting the first model parameter and the second model parameter includes: determining the first model parameter based on the second model parameter through an exponential-moving-average (EMA) method, and configuring the teacher model by using the determined first model parameter .

In an embodiment, the method further includes:
iterating the step of processing the mixed speech signal through the student model and the teacher model separately, to obtain the multiple pieces of the correctness information and the multiple pieces of the consistency information, where each iteration corresponds to one piece of the correctness information and one piece of the consistency information.

Obtaining the speech separation model includes:
outputting, in response to that an iteration satisfies a training-terminating condition, the student model determined in the iteration as the speech separation model.

In an embodiment, the student model and the teacher model perform signal separation through permutation-invariant training (PIT), or the student model and the teacher model perform signal separation through salience-based selection.

In another aspect, a method for speech separation is provided. The method is executable by a computer device, and includes:

training a speech separation model through any of the previous methods;
obtaining a sound signal on which the speech separation is to be performed:

inputting the sound signal into the speech separation model; and
predicting a clean speech signal included in the sound signal through the speech separation model, and outputting the clean speech signal in the sound signal.

In an embodiment, a loss function of the cooperative iterative training is constructed based on correctness information between an output of the student model and an input of the student model in the training, and based on consistency information between the output of the student model and an output of the teacher model.

In an embodiment, the loss function of the cooperative iterative training is constructed based on:

correctness information between a first clean speech signal outputted by the student model and a clean speech signal included in the mixed speech signal, and consistency information between the first clean speech signal outputted by the student model and a second clean speech signal outputted by the teacher model;

correctness information between a first interfering signal outputted by the student model and an interfering signal included in the mixed speech signal, and consistency information between a first clean speech signal outputted by the student model and a second clean speech signal outputted by the teacher model; or

first correctness information between a first clean speech signal outputted by the student model and a clean speech signal included in the mixed speech signal, second correctness information between a first interfering signal outputted by the student model and an interfering signal included in the mixed speech signal, first consistency information between the first clean speech signal outputted by the student model and a second clean speech signal outputted by the teacher model, and second consistency information between the first interfering signal outputted by the student model and a second interfering signal outputted by the teacher model.

In an embodiment, the loss function of the cooperative iterative training is constructed based on:

a short-term time-varying abstract feature outputted by the student model and a short-term time-varying abstract feature outputted by the teacher model; or

a short-term time-varying abstract feature outputted by the student model and a short-term time-varying abstract feature outputted by the teacher model, and the short-term time-varying abstract feature outputted by the student model and a long-term stable abstract feature outputted by the teacher model.

In another aspect, an apparatus for processing a speech signal is provided according to claim 10.

In another aspect, a computer device is provided, including one or more processors and one or more memories storing at least one computer program, where the at least one computer program is configured to be loaded and executed by the one or more processors to implement the method for processing the speech signal or the method for speech separation according to any foregoing embodiment.

In another aspect, a computer-readable storage medium is provided, where the computer-readable storage medium stores at least one computer program, the at least one computer program is configured to be loaded and executed by a processor to implement the method for processing the speech signal or the method for speech separation according to any foregoing embodiment.

## BRIEF DESCRIPTION OF THE DRAWINGS

For clearer illustration of the technical solutions according to embodiments of the present disclosure, hereinafter briefly described are the drawings to be applied in embodiments of the present disclosure. Apparently, the drawings in the following descriptions are only some embodiments of the present disclosure, and other drawings may be obtained by those skilled in the art based on the provided drawings without creative efforts.

Figure 1 is a schematic diagram of an environment for implementing a method for training a speech separation model according to an embodiment of the present disclosure.

Figure 2 is a schematic diagram of a principle of a method for training a speech separation model according to an embodiment of the present disclosure.

Figure 3 is a schematic flowchart of a method for training a speech separation model according to an embodiment of the present disclosure.

Figure 4 is a schematic flowchart of processing a mixed speech signal through a student model according to an embodiment of the present disclosure.

Figure 5 is a schematic diagram of internal architecture of a student model according to an embodiment of the present disclosure.

Figure 6 is a flowchart of a method for speech separation according to an embodiment of the present disclosure.

Figure 7 is a schematic structural diagram of an apparatus for training a speech separation model according to an embodiment of the present disclosure.

Figure 8 is a schematic structural diagram of an apparatus for speech separation according to an embodiment of the present disclosure.

Figure 9 is a schematic structural diagram of a server according to an embodiment of the present disclosure.

Figure 10 is a schematic structural diagram of a terminal according to an embodiment of the present disclosure.

DESCRIPTION OF EMBODIMENTS

In order to clarity objectives, technical solutions, and advantages of the present disclosure, hereinafter embodiments of the present disclosure are further described in details in conjunction with the drawings.

In order to facilitate understanding the technical solutions in the embodiments of the present disclosure, some terms involved in the embodiments of the present disclosure are explained below.

Artificial Intelligence (AI) refers to a theory, a method, technology, or an application system, which simulates, extends, and expands human intelligence, perceives an environment, acquires knowledge, and utilizes knowledge, to obtain an optimal result via a digital computer or a machine controlled by a digital computer. In other words, the AI is a comprehensive technology of computer science, which attempts to understand essence of intelligence and produce a novel intelligent machine that can react in a manner similar to human intelligence. The AI aims at studying design principles and implementation methods of various intelligent machines, so as to render machines capable of perceiving, reasoning, and making decisions

AI technology is a comprehensive discipline related to a wide range of fields, and includes techniques at levels of both hardware and software level. Basic AI technology generally includes techniques such as sensors, dedicated AI chips, cloud computing, distributed storage, big data processing, operation/interaction systems, and mechatronics. AI software technology mainly includes several major directions such as computer vision, speech processing, natural language processing, and machine learning (ML) or deep learning.

Key technology of the speech technology includes automatic speech recognition (ASR) technology, text-to-speech (TTS) technology, and voiceprint recognition technology. An aim of further development of human-computer interaction is making a computer capable of listening, seeing, speaking, and feeling, and speech is one of the most promising means of future human-computer interaction.

Nature language processing (NLP) is an important direction in the fields of computer science and AI. The NLP studies various theories and methods for implementing effective communication between human and computers through natural languages, and is a science that integrates linguistics, computer science, and mathematics. Therefore, research in the NLP concerns natural languages, that is, languages used by people in daily life, and the NLP is closely related to linguistic studies. Generally, NLP technology includes text processing, semantic understanding, machine translation, robot question and answering, knowledge atlas, and other techniques.

The ML is multi-field interdiscipline, and relates to multiple disciplines such as the probability theory, statistics, the approximation theory, convex analysis, and the theory of algorithm complexity. The ML specializes in studying how a computer simulates or implements human learning behaviors to obtain new knowledge or new skills, and how a computer reorganizes a structure of existing knowledge to keep improving its performances. The ML is a core of AI, is a fundamental way to make a computer intelligent, and is applied to various fields of AI. Generally, the ML and deep learning include techniques such as artificial neural networks, belief networks, reinforcement learning, transfer learning, inductive learning, and learning from instructions

In recent years, supervised learning has been introduced in speech separation and made some progresses. The supervised learning requires manual collection of labeled training samples which are of high quality, and such process is time-consuming, labor-intensive, and inefficient. In addition, it is impractical to acquire labeled training samples that cover all types of practical application scenarios.

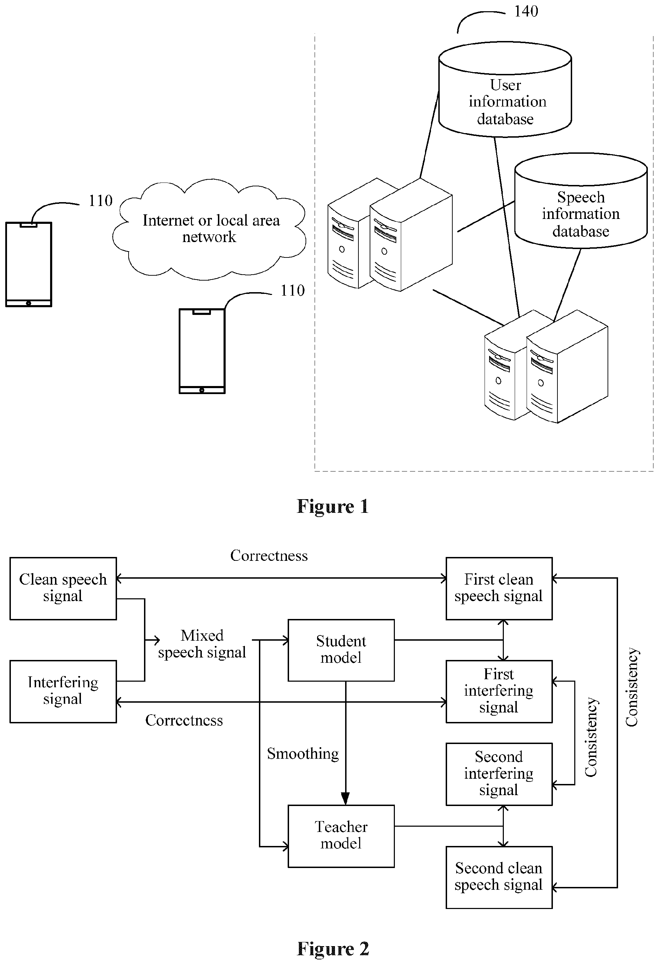

Figure 1 is a schematic diagram of an implementation environment according to an embodiment of the present disclosure. Reference is made to Figure 1, in which the implementation environment includes a server 110 and a terminal 140. The terminal 110 is connected to the server 140 via a wireless network or a wired network.

In an optional embodiment, a type of the terminal 110 includes at least one of: a smartphone, a tablet computer, a smart speaker, an e-book, an MP3 (Moving Picture Experts Group Audio Layer III) player, an MP4 (Moving Picture Experts Group Audio Layer III) player, a laptop portable computer, a desktop computer, or an in-vehicle computer. An application supporting speech separation technology is installed and executable on the terminal 110. The application may be a speech assistant application, and the speech assistant application may further have functions such as data recording, audio/video playback, translation, and data query. For example, the terminal 110 is used by a user, who logs in a user account in the application executed on the terminal 110.

In an optional embodiment, the server 140 includes at least one of: a single server, multiple servers, a cloud computing platform, or a virtualized center. The server 140 is configured to provide a back-end service for an application supporting speech separation. In an optional embodiment, the server 140 is responsible for primary speech separation operation, and the terminal 110 is responsible for auxiliary speech separation operation. Alternatively, the server 140 is responsible for auxiliary speech separation operation, and the terminal 110 is responsible for primary speech separation operation. Alternatively, the server 140 and the terminal 110 each may be independently responsible for speech separation work.

In an optional embodiment, the server 140 includes an access server, a speech server, and a database. The access server is configured to provide an access service for the terminal 110. The speech server is configured to provide a back-end service related to speech separation processing. The database may include a speech information database, a user information database, or the like. Different services provided based on the server may correspond to different databases. A quantity of speech servers may be one or more. In case of multiple speech servers, at least two speech servers are configured to provide different services, and/or at least two speech servers are configured to provide the same service, for example, in a load-balancing manner. Embodiments of the present disclosure are not limited thereto.

Generally, the terminal 110 may refer to one of multiple terminals. In this embodiment, only the terminal 110 is taken as an example for description.

Those skilled in the art may appreciate that there may be more or fewer terminals. For example, there may be only one terminal, or there may be dozens or hundreds (or even more) terminals. In the latter case, the environment further includes another terminal. A quantity and a type of the terminals are not limited herein.

The foregoing speech separation method may be applied to a product such as an in-vehicle terminal, a TV box, a speech recognition product, a voiceprint recognition product, a smart speech assistant, or a smart speaker, or may be applied to the front end of the foregoing product, or may be implemented through the interaction between the terminal and the server.

Using an in-vehicle terminal as an example, the in-vehicle terminal may acquire a speech signal, perform speech separation on the speech signal, perform speech recognition based on a separated clean speech signal, and perform a corresponding driving control or processing process based on recognized speech content information. Using an automatic speech recognition product as an example, the terminal may acquire a speech signal and send the speech signal to the server. The server performs speech separation on the speech signal, then performs speech recognition on a separated clean speech signal, and performs recording or other subsequent corresponding processing based on recognized speech content information.

The method for speech separation may be applied to a product such as an in-vehicle terminal, a TV box, a speech recognition product, a voiceprint recognition product, a smart speech assistant, or a smart speaker. The method may be applied to a front end of the foregoing product(s), or may be implemented through interaction between the front end and the server.

An in-vehicle terminal is taken as an example. The in-vehicle terminal may acquire a speech signal, perform speech separation on the speech signal, perform speech recognition on a clean speech signal obtained from the speech separation, and perform corresponding driving control or processing based on speech content information obtained from the speech recognition. Alternatively, the in-vehicle terminal may send the speech signal to a backend server connected to the in-vehicle terminal. The backend server performs speech separation and speech recognition on the received speech signal to obtain speech content corresponding to the speech signal. In response to the speech content, the backend server may send the speech content or corresponding feedback information to the in-vehicle terminal. The in-vehicle terminal performs corresponding driving control or processing, such as open or shut a sunroof, enable or disable a navigation system, or turn on or off a light, based on the speech content or the feedback information that is received.

The method for speech separation in the embodiments of the present disclosure may be applied to various products which are based on speech functions. The foregoing description is only for help understand embodiments and does not constitute any undue limitation on the embodiments.

Training samples may be generated before model training begins. A clean speech signals and an interfering signal are mixed to generate a mixed speech signal. Such mixed speech signal serves as a training sample, and the clean speech signal included in the mixed speech signal serves as a label. Thereby, subsequent model training may be implemented through calculating based on a loss function.

A process of generating the mixed speech signal may be expressed by a following equation (1).

$$X = x + e \qquad (1)$$

$x$ represents a time-frequency point of the clean speech signal, $e$ represents a time-frequency point of the interfering signal, and $X$ represents a time-frequency point of the mixed speech signal.

The clean speech signals in the mixed speech signals may serves as labels to obtain a group of labeled training samples, $\{X^{(1)},...,X^{(L)}\}$. The clean speech signals in the mixed speech signals may not serve as labels to obtain a group of unlabeled training samples, $\{X^{(L+1)},...,X^{(L+U)}\}$.

Each training sample is formed by a group of time-frequency points in an input space, that is, $\{x = X_{t,f}\}t = 1...,T$; $f = 1...,F$. In some embodiments, the time-frequency points of the mixed speech signal may be represented by using a short-time Fourier transform (STFT) spectrum. In such case, T represents a quantity of frames that are inputted, and F represents a quantity of frequency bands used in the STFT.

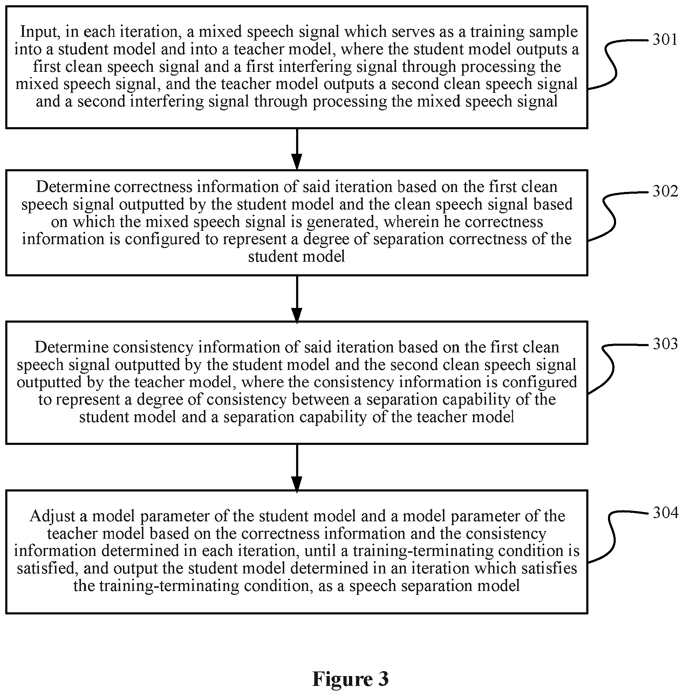

Figure 2 is a schematic diagram of a principle of a method for training a speech separation model according to an embodiment of the present disclosure. Reference is made to Figure 2, in which network architecture for the training includes a student model and a teacher model. At an initial state, a model parameter of the teacher model is configured based on a parameter of the student model. In each iteration, when the model parameter of the student model is adjusted based on a loss function, the model parameter of the teacher model is correspondingly adjusted based on the adjusted student model. Thereby, the training of the models is iteratively implemented in batches. Hereinafter a training process of a speech separation model is briefly illustrated based on the schematic diagram as shown in Figure 2 and a flowchart as shown in Figure 3. Reference is made to flows of training as shown in Figure 2 and Figure 3, in which a training process may include following steps 301 to 304.

In step 301, a computer device inputs, in each iteration, a mixed speech signal which serves as a training sample into a student model and into a teacher model. The student model outputs a first clean speech signal and a first interfering signal through processing the mixed speech signal, and the teacher model outputs a second clean speech signal and a second interfering signal through processing the mixed speech signal.

A single iteration is taken as an example in the step 301 to show an embodiment, in which the mixed speech signal is inputted into the student model and the teacher model by the computer device. The mixed speech signal is labeled with a clean speech signal, based on which the mixed speech signal is generated. The mixed speech signal includes an interfering signal besides the clean speech signal. In an optional embodiment, the student model processes the mixed speech signal to output the first clean speech signal and the first interfering signal, and the teacher model processes the mixed speech signal to output the second clean speech signal and the second interfering signal.

In step 302, the computer device determines correctness information of said iteration based on the first clean speech signal outputted by the student model and the clean speech signal based on which the mixed speech signal is generated. The correctness information is configured to represent a degree of separation correctness of the student model.

The step 302 shows an embodiment in which the correctness information by the computer device based on the signal outputted by the student model and the clean speech signal labeled in the mixed speech signal. Signals outputted by the student model include the first clean speech signal and the first interfering signal. Hence, besides determining the correctness information as described in the step 302, the computer device may determine the correctness information based on the first interfering signal outputted by the student model and the interfering signal included in the mixed speech signal. Alternatively, the computer device may combine the above two manners, that is, weight the correctness information determined in the two manners to obtain the final correctness information. A specific manner of obtaining the correctness information is not limited herein.

In step 303, the computer device determines consistency information of said iteration based on the first clean speech signal outputted by the student model and the second clean speech signal outputted by the teacher model. The consistency information is configured to represent a degree of consistency between a separation capability of the student model and a separation capability of the teacher model.

The step 303 shows an embodiment of determining the consistency information by the computer device based on the signal outputted by the student model and the signal outputted by the teacher model. Signals outputted by the student model include the first clean speech signal and the first interfering signal, and signals outputted by the teacher model include the second clean speech signal and the second interfering signal. Hence, besides determining the consistency information as described in the step 303, the computer device may determine the consistency information based on the first interfering signal outputted by the student model and the second interfering signal outputted by the teacher model. Alternatively, the computer device may combine the above two manners, that is, weight the consistency information determined in the two manners to obtain the final consistency information. A specific manner of obtaining the consistency information is not limited herein.

In step 304, the computer device adjusts a model parameter of the student model and a model parameter of the teacher model based on the correctness information and the consistency information determined in each iteration until a training-terminating condition is satisfied, and outputs the student model determined in an iteration which satisfies the training-terminating condition, as a speech separation model.

The step 304 shows an embodiment of adjusting the model parameter of the student model and the model parameter of the teacher model based on multiple pieces of correctness information and multiple of pieces of consistency information by the computer device to obtain the speech separation model. Each iteration corresponds to one piece of correctness information and one piece of consistency information. The foregoing steps 301 to 303 are iterated, that is, the mixed speech signal is repeatedly inputted into the student model and into the teacher model, and thereby the multiple pieces of correctness information and the multiple pieces of consistency information can be obtained. In an embodiment, when adjusting the model parameter of the teacher model and the model parameter of the student model iteratively, the computer device outputs the student model determined in an iteration that satisfies the training-terminating condition as the speech separation model, in response to the training-terminating condition is satisfied. Alternatively, the computer device may output the teacher model determined in the iteration that satisfies the training-terminating condition as the speech separation model.

In one iteration, a value of a loss function is determined based on the correctness information and the consistency information which are determined in such iteration. The model parameter of the student model is adjusted based on the value of the loss function, and the model parameter of the teacher model is adjusted based on the model parameter of the student model. The iterative training proceeds based on the adjusted models until the training-terminating condition is satisfied, and the trained student model serves as the speech separation model.

The above training on the student model may be regarded as a supervised learning process, and the above training of the teacher model may be regarded as a semi-supervised learning process. The teacher model is configured to ensure good convergence of the student model in the training, and therefore the trained speech separation model has a strong separation capability, high correctness, and high consistency.

In embodiments of the present disclosure, the training process is performed based on correctness of a separation result obtained by the student model and consistency between a separation result obtained by the teacher model and the separation result obtained by the student model. The separation correctness of the trained speech separation model can be improved, and meanwhile the separation stability of the trained speech separation model can be maintained. Hence, the separation capability of the trained speech separation model is greatly improved.

In each iteration, the model parameter of the teacher model changes with the model parameter of the student model, and the consistency between outputs of the teacher model and the student model is considered when constructing the loss function. Thereby, the training on the student model is smoothed by the teacher model. In an optional embodiment, the model parameter of the teacher model may be configured in each iteration in a following manner. The model parameter of the teacher model is determined based on the model parameter of the student model through an exponential-moving-average (EMA) method, and the teacher model is configured by using the determined model parameter of the teacher model. Such configuration may be regarded as a process of smoothing the model parameter.

An encoder parameter in the teacher model is taken as an example. In one iteration, the encoder parameter of the teacher model is calculated based on a following equation (2).

$$\theta_l' = \alpha\theta_{l-1}' + (1-\alpha)\theta_l \qquad (2)$$

$\alpha$ is a smoothing coefficient for the encoder parameter. $l$ is a sequential number of such iteration, and is a positive integer greater than 1. $\theta$ and $\theta'$ represents encoder parameters of the student model and the teacher model, respectively.

A parameter of an abstract-feature extractor in the teacher model is taken as an example. In one iteration, the parameter of the abstract-feature extractor in the teacher model is calculated based on a following equation (3).

$$\psi_l' = \alpha\psi_{l-1}' + (1-\alpha)\psi_l \qquad (3)$$

$\alpha$ is a smoothing coefficient for the parameter. $l$ is a sequential number of such iteration, and is a positive integer greater than 1. $\psi$ and $\psi'$ represent parameters of abstract-feature extractors of the student model and the teacher model, respectively.

The foregoing parameter calculation merely shows a few examples of determining the model parameter of the teacher model based on the model parameter of the student model. The model parameter may alternatively be calculated in other manners, or the model parameter may alternatively include another type of parameter. Embodiments of the present disclosure are not limited thereto.

Hereinafter a flow of processing in the models during the model training is illustrated based on examples.

In one iteration, a mixed speech signal that serves as a training sample is inputted into the student model and into the teacher model. The student model outputs a first clean speech signal and a first interfering signal through processing the mixed speech signal, and the teacher model outputs a second clean speech signal and a second interfering signal through processing the mixed speech signal.

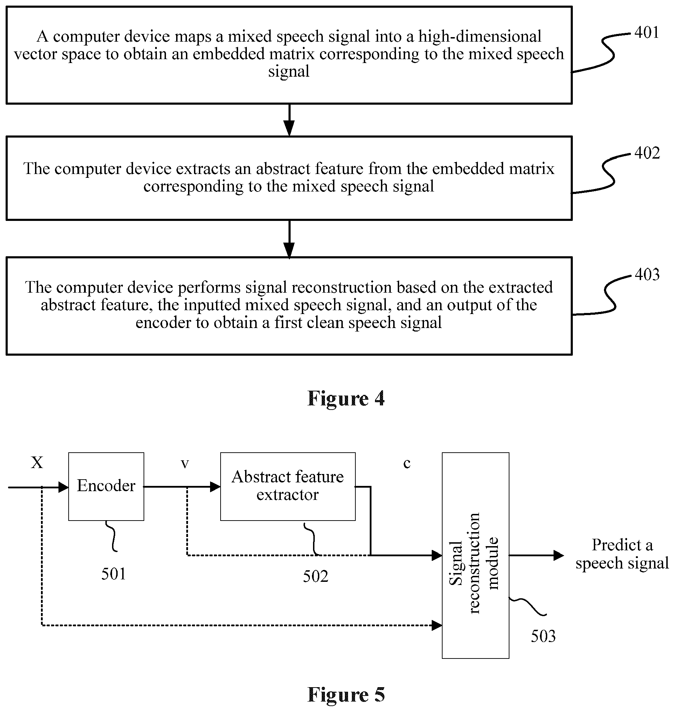

The student model and the teacher model may have similar architecture, that is, processing in the two models may follow similar processing. Hereinafter illustration is based on a processing flow and model architecture of the student model. Figure 4 is a schematic flowchart of processing a mixed speech signal through a student model according to an embodiment of the present disclosure, and Figure 5 is a schematic diagram of an internal structure for implementing such model. Reference is made to Figure 4, in which the process includes following steps 401 to 403.

In step 401, a computer device maps a mixed speech signal into a high-dimensional vector space to obtain an embedded matrix corresponding to the mixed speech signal.

The step 401 is a process of feature conversion on the mixed speech signal, in which the mixed speech signal may be converted into a form of an input of a model. In an embodiment, the computer device windows the mixed speech signal to acquire frames, and performs fast Fourier transform (FFT) on the frames to convert signals from a time domain into a frequency domain. The obtained frequency-domain signals, when arranged according to the temporal sequence, can form a feature matrix that represents the mixed speech signal. The computer device maps the feature matrix into the high-dimensional vector space, such that the embedded matrix corresponding to the mixed speech signal is obtained.

A feature of the mixed speech signal may be a feature from a short-time Fourier transform (STFT) sound spectrum, a feature from a log-Mel spectrum, a feature from a Mel-frequency cepstral coefficient (MFCC), or a score predicted by a previous convolutional neural network (CNN). The feature of the mixed speech signal may be a feature from another factor, or may be a combination of various features. Embodiments of the present disclosure are not limited thereto.

The step 401 may be implemented by an encoder 501 as shown in Figure 5. Hereinafter an example in which the feature after conversion is a short-time Fourier transform sound spectrum is taken to illustrate processing of the encoder.

The mixed speech signal is inputted into the encoder. The encoder obtains a feature matrix based on the STFT sound spectrum of the mixed speech signal, then maps the feature matrix into a high-dimensional vector space, and outputs the embedded matrix corresponding to the mixed speech signal. For example, $X \subseteq R^{TF}$ may represent the feature matrix (where T and F respectively represent a quantity of frames and a quantity of frequency bands, in the mixed speech signal inputted into the encoder) obtained after the encoder processes the mixed speech signal. A process of the encoder mapping the feature matrix to a vector in the high-dimensional space and outputting the embedded matrix $v$ of the mixed speech signal may be expressed as $E_\theta : X \to v \subseteq R^{TF \times D}$, where $\theta$ represents a model parameter of the encoder.

In step 402, the computer device extracts an abstract feature from the embedded matrix corresponding to the mixed speech signal.

The step 402 is a process of feature extraction. The extracted feature may be configured to represent the mixed speech signal and provide a basis for subsequent speech signal reconstruction.

This step may be implemented by an abstract-feature extractor 502 as shown in Figure 5. The abstract feature extractor may be an autoregressive model. For example, a long short term memory network (LSTM) model is adopted in case of a causal system, or a bi-directional long short-term memory (Bi-LSTM) model is adopted in case of a non-causal system. Thereby, short-term abstract features or long-term abstract features are extracted according to the temporal sequence from the embedded matrix corresponding to the mixed speech signal. A recurrent model or a summary function may be alternatively adopted to extract global abstract features from the embedded matrix. Specific model architecture of the abstract-feature extractor and a specific type of the extracted abstract features are not limited herein.

An autoregressive model is taken as an example for illustrating processing in the abstract-feature extractor.

In an embodiment, a weight matrix P is provided to calculate the extracted feature based on a following equation.

$$c_t = \frac{\sum_f v_{t,f} \ e \quad p_{t,f}}{\sum_f p_{t,f}} \qquad (4)$$

$c_t \in c$ represents a short-term time-varying abstract feature, $v \in v$ represents an element in the embedded matrix, $p \in P$ represents a weight, e represents calculating a dot product, and t and f represent a frame index and a frequency band index, respectively, for the STFT sound spectrum.

In an embodiment, a feature obtained through the feature extraction may be reshaped to cancel an influence of a matrix element whose value is less than a threshold. Thereby, an impact of low-energy noise on the feature extraction is reduced. In this embodiment, for example, the feature matrix may be normalized. An element corresponds to a coefficient equal to 0 in case of having a value less than a threshold, and otherwise corresponds to a coefficient equal to 1. For example, the computer device may incorporate a binary threshold matrix into the equation (4), which helps reduce the impact of low-energy noise on a process of extracting the abstract feature. In such case, an equation (5) is obtained as follows.

$$c_t = \frac{\sum_f v_t \ e \ p_t \ e \ w_t}{\sum_f p_t \ e \ w_t} \qquad (5)$$

$w \in R^{TF}$ represents the binary threshold matrix, in which elements are configured as follows.

$$W_{t,f} = \begin{cases} 0, \text{ if } X_{t,f} < \max(X)/100 \\ 1, \text{ otherwise} \end{cases} \quad (6)$$

The foregoing process of the abstract feature extractor extracting the abstract feature c from the embedded matrix $v$ may be expressed as $A_\psi$: $v \rightarrow P \subseteq R^{TF}$, $v \times P \rightarrow c \subseteq R^D$. $\psi$ represents a model parameter of the abstract feature extractor.

In step 403, the computer device performs signal reconstruction based on the extracted abstract feature, the inputted mixed speech signal, and an output of the encoder to obtain a first clean speech signal.

Signal reconstruction is performed based on the above inputs to obtain a new set of speech signals, which provide a basis for subsequent speech signal comparison and training-loss calculation. A speech signal outputted by the student model is called the first clean speech signal to facilitated understanding.

This step may be implemented by a signal reconstruction module 503 as shown in Figure 5. The signal reconstruction module 503 may reconstruct a speech signal, by using a signal reconstruction algorithm, according to the extracted abstract feature, the mixed speech signal, and a feature of the embedded matrix, so as to output the first clean speech signal and a first interfering signal. The first clean speech signal and the first interfering signal that are outputted may be configured to calculate a value of the loss function for the current iteration, and thereby train the model through back propagation.

In an exemplary structure, the encoder may adopt a four-layer Bi-LSTM structure. Each hidden layer has 600 nodes, and a hidden vector having a dimension of 600 can be mapped to a high-dimensional vector space having a dimension of 257*40. An output layer has 40 nodes. The encoder processes the mixed speech signal under a configuration of: a 16 KHz sampling rate, a 25 ms window length, a 10 ms window shift, and 257 frequency bands. Each training sample in the corpus is randomly down-sampled to 32 frames. An abstract-feature extractor connected to the encoder may include a fully connected layer that can map a hidden vector having a dimension of 257*40 to a vector having a dimension of 600. The signal reconstruction module may have a two-layer Bi-LSTM structure, of which each hidden layer has 600 nodes.

At least one of the encoder, the abstract feature extractor, or the signal reconstruction module may be configured to have more layers, or may be of another model type, according to complexity in practice and a requirement on performances. A specific model type and a specific topological structure of the foregoing models are not limited herein. Any foregoing model may be modified to have another effective architecture, such as an LSTM network, a convolutional neural network, a time delay network, a gated convolutional neural network, or a combination of various network structures.

The foregoing description merely illustrates the model structure and the processing flow of the student model. In embodiments of the present disclosure, a model structure and a processing flow of the teacher model may be similar to those of the student model. It is appreciated the teacher model may adopt more complex architecture to extract features having different time-domain characteristics. Thereby, signal reconstruction may be performed based on the features having different time-domain characteristics. The value of the loss function may be calculated and the back-propagation in the model training may be performed based on a result of the signal reconstruction.

For example, the student model may extract an abstract feature having a high temporal resolution, that is, a short-term time-varying abstract feature, based on the process as described in the equation (5). The teacher model may also extract a short-term time-varying abstract feature through a similar process. In an embodiment, the teacher model may, alternatively or additionally, extract an abstract feature having a lower temporal resolution during the feature extraction. Such abstract feature having the lower temporal resolution is called a long-term stable abstract feature to facilitate understanding. Such abstract feature may be calculated based on a following equation (7).

$$c'_L = \frac{\sum_{t,f} v' e\, p' e\, w}{\sum_{t,f} p' e\, w} \quad (7)$$

$c'_L \in c'$ represents the long-term stable abstract feature. $v' \in v'$ represents an element in a high-dimensional embedded matrix. $p' \in P'$ represents a weight, e represents calculating a dot product. t and f represent a frame index and a frequency band index, respectively, for the STFT sound spectrum. w represents an element in the binary threshold matrix described in the equation (6). It is appreciated that the binary threshold matrix may be omitted in this embodiment, which is not limited herein.

The abstract feature having the lower temporal resolution, i.e. the long-term stable abstract feature, is more suitable for a generalization process that obtains a hidden speaker feature. The abstract feature having the high temporal resolution, i.e. the short-term time-varying abstract feature, is more suitable for a task that requires a high temporal resolution, such as reconstructing a frequency spectrum of a speaker.

Two types of training objectives are comprehensively adopted when training the student model to obtain a corresponding model parameter. A first type concerns supervised training, of which an objective is improving correctness. A second type concerns consistency learning between the teacher model and the student model.

In order to improve the correctness, the correctness information of the iteration(s) needs to be determined based on the signal outputted by the student model and the clean speech signal that serves as a label and included in the mixed speech signal. A process of determining the correctness information may be implemented in any of the following manners.

In a first manner, the correctness information of an iteration is determined based on the first clean speech signal outputted by the student model and the clean speech signal that serves as the label and included in the mixed speech signal.

In a second manner, the correctness information of an iteration is determined based on the first interfering signal outputted by the student model and an interfering signal that is included in the mixed speech signal and other than the clean speech signal.

In a third manner, first correctness information of an iteration is determined based on the first clean speech signal outputted by the student model and the clean speech signal that serves as the label and included in the mixed speech signal. Second correctness information of the iteration is determined based on the first interfering signal outputted by the student model and an interfering signal that is included in the mixed speech signal and other than the clean speech signal. The correctness information of the iteration is determined according to the first correctness information and the second correctness information.

The first clean speech signal may be, for example, a speech signal having the highest energy, as shown in a following equation (8). Alternatively, the first clean speech signal may be determined based on a permutation-invariant training (PIT) algorithm, as shown in a following equation (9). It is appreciated that the first clean speech signal may be determined in another manner, which is not limited herein.

The correctness information is configured to determine a difference between a signal obtained through separation and another signal serving as a reference. For example, the correctness information may be a mean-square error (MSE) between frequency spectra of the two signals, or may be calculated based on a scale invariant signal-to-noise ratio (SI-SNR) objective function. Embodiments of the present disclosure are not limited thereto.

It is taken as an example that the correctness information is calculated based on salience-based selection, which is a quite intuitive mechanism. The MSE between the first clean speech signal having the highest energy and the clean speech signal serving as the label may be calculated based on the following equation (8).

$$L_{\theta,\psi}^{(MSE)} = \sum_{t,f} \| x - X \mathrm{gSigmoid}(c_t^T v_{t,f}) \|_2^2 \qquad (8)$$

$x$ represents the clean speech signal, $X$ represents the mixed speech signal, $c$ represents the abstract feature, $v$ represents the embedded matrix, and t and f represent the frame index and the frequency band index, respectively, for the STFT sound spectrum.

As another example, the correctness information is calculated through the PIT. The MSEs between all candidate first clean speech signals and the clean speech signal serving as the label, and between all candidate first interfering signals and the interfering signal serving as another label, may be calculated based on the following equation (9).

$$L_{\theta,\psi}^{(MSE)} = \min_{c_t \in \{c_{t1}, c_{t2}\}} \sum_{t,f} \| x - X \mathrm{gSigmoid}(c_t^T v_{t,f}) \|_2^2 + \min_{c_t \in \{c_{t1}, c_{t2}\}} \sum_{t,f} \| e - X \mathrm{gSigmoid}(c_t^T v_{t,f}) \|_2^2 \quad (9)$$

$x$ represents the clean speech signal, $X$ represents the mixed speech signal, $e$ represents the interfering signal, $c$ represents the abstract feature, $v$ represents the embedded matrix, and t and f represent the frame index and the frequency band index, respectively, for the STFT sound spectrum.

The foregoing three manners may be regarded as methods for constructing a loss function, that is, methods for selecting which input/output to construct the loss function, such that the model can be trained through back-propagation based on the loss function. Such loss function is an objective function for reconstruction. Supervised model learning that uses such objective function can ensure that the learned representation includes encoded speech information of a target speaker. Thereby, the supervised discriminative learning, when combined with a speech separation task, can enable the student model to estimate a short-term time-varying abstract feature effectively.

In order to learn consistency between the teacher model and the student model, the consistency information of the iteration(s) needs to be determined based on the signal outputted by the student model and the signal outputted by the teacher model. A process of determining the consistency information may implemented in any of following manners.

In a first manner, the consistency information of an iteration is determined based on the first clean speech signal outputted by the student model and the second clean speech signal outputted by the teacher model.

In a second manner, the consistency information of an iteration is determined based on the first interfering signal outputted by the student model and the second interfering signal outputted by the teacher model.

In the third manner, first consistency information of an iteration is determined based on the first clean speech signal outputted by the student model and the second clean speech signal outputted by the teacher model. Second consistency information of the iteration is determined based on the first interfering signal outputted by the student model and the second interfering signal outputted by the teacher model. The consistency information of the iteration is determined according to the first consistency information and the second consistency information.

The first clean speech signal may be, for example, a speech signal having the highest energy as shown in the equation (8), or a speech signal determined based on the PIT algorithm as described in the equation (9). It is appreciated that the first clean speech signal may be determined based on another method, which is not limited herein.

The consistency information is configured to indicate a difference between a spectrum of a target speaker, which is estimated by the teacher model, and a spectrum of the target speaker, which is estimated by the student model. For example, the consistency information may be an MSE between spectra of signals, or may be a SI-SNR. Embodiments of the present disclosure are not limited thereto.

The foregoing three manners may be understood as a method for constructing a loss function, that is, for selecting which input/output to construct he loss function, such that the model can be trained through back-propagation based on the loss function. The loss function constructed herein is configured to calculate the difference between the spectrum of the target speaker, which is estimated by the teacher model, and the spectrum of the target speaker, which is estimated by the student model.

As mentioned in the foregoing embodiments, the teacher model may extract two types of features, that is, the short-term time-varying abstract feature and the long-term stable abstract feature. The consistency information may be determined based on the two types of features. Third consistency information of an iteration is determined based on a short-term time-varying abstract feature of the first clean speech signal and the short-term time-varying abstract feature of the second clean speech signal outputted by the teacher model. Fourth consistency information of the iteration is determined based on the short-term time-varying abstract feature of the first clean speech signal and the long-term stable abstract feature of the second clean speech signal outputted by the teacher model. In an optional embodiment, a sum of the third consistency information that is weighted and the fourth consistency information that is weighted are calculated to construct the final consistency information of the iteration.

Correspondingly, the loss function may be constructed based on only the short-term time-varying abstract features of the student model and the teacher model. Alternatively, the loss function may be constructed based on the short-term time-varying abstract features of the student model and the teacher model, as well as the long-term stable abstract feature of the teacher model.

For example, when the loss function is constructed based on the short-term time-varying abstract features of the student model and the teacher model, a following equation (10) may be used.

$$L_{\theta,\psi}^{(MSE).short} = \sum_{t,f} \|X g(Sigmoid(c_t'^T v_{t,f}') - Sigmoid(c_t^T v_{t,f}))\|_2^2 \quad (10)$$

$X$ represents the mixed speech signal. $c_t$ and $c_t'$ represent short-term time-varying abstract features predicted by the student model and the teacher model, respectively. $v$ and $v'$ represent embedded matrices of the student model and the teacher model, respectively. t and f represent the frame index and the frequency band index, respectively, for the STFT sound spectrum.

For example, when the loss function is constructed based on the short-term time-varying abstract features of the student model and the teacher model as well as the long-term stable abstract feature of the teacher model, a following equation (11) may be used.

$$L_{\theta,\psi}^{(MSE).long} = \sum_{t,f} \|X g(Sigmoid(c_L'^T v_{t,f}') - Sigmoid(c_t^T v_{t,f}))\|_2^2 \quad (11)$$

$X$ represents the mixed speech signal, $c_L'$ represents a long-term stable abstract feature predicted by the teacher model, $c$ represents a short-term time-varying abstract feature predicted by the student model, $v$ and $v'$ represent

the embedded matrices of the student model and the teacher model, respectively, and t and f represent the frame index and the frequency band index, respectively, for the STFT sound spectrum.

The whole model training needs to be performed by considering both correctness and consistency. The model parameter of the student model and the model parameter of the teacher model are adjusted in each iteration based on the correctness information and the consistency information determined in such iteration, until a training-terminating condition is satisfied. The student model determined in an iteration that satisfies the training-terminating condition is outputted as the speech separation model. The construction of the loss functions of which the training objectives are the correctness and the consistency between the models, respectively, has been described in the foregoing embodiments. In order to implement training that combines the correctness information and the consistency information, it is necessary to establish a joint loss function that can reflect both the correctness information and the consistency information.

In an embodiment, when adjusting the model parameters, the model parameter of the student model and the model parameter of the teacher model may be adjusted based on the third consistency information and the correctness information determined in each iteration. That is, the joint loss function may be expressed by a following equation (12).

$$L = \underbrace{L^{(MSE)}_{\theta,\psi}}_{correctness} + \lambda \underbrace{L^{(MSE).short}_{\theta,\psi}}_{consistency} \tag{12}$$

$\underbrace{L^{(MSE)}_{\theta,\psi}}_{correctness}$ represents the loss function of which the training objective is correctness. $\underbrace{L^{(MSE).short}_{\theta,\psi}}_{consistency}$ represents the loss function of which the training objective is consistency, and may be a loss function constructed based on the short-term time-varying abstract features. $\lambda$ is a weighting factor, and may be continuously optimized in neural network iterations until an optimal value is reached.

In an embodiment, when adjusting the model parameters, the model parameter of the student model and the model parameter of the teacher model may be adjusted based on the weighted third consistency information, the weighted fourth consistency information, and the correctness information determined in each iteration. That is, the joint loss function may be expressed by a following equation (13).

$$L = \underbrace{L^{(MSE)}_{\theta,\psi}}_{correctness} + \underbrace{\lambda_1 L^{(MSE).short}_{\theta,\psi} + \lambda_2 L^{(MSE).long}_{\theta,\psi}}_{consistency} \tag{13}$$

$\underbrace{L^{(MSE)}_{\theta,\psi}}_{correctness}$ represents the loss function of which the training objective is correctness. $\underbrace{\lambda_1 L^{(MSE).short}_{\theta,\psi} + \lambda_2 L^{(MSE).long}_{\theta,\psi}}_{consistency}$ represents a loss function constructed based on the short-term time-varying abstract features and the long-term stable abstract feature. $\lambda_1$ and $\lambda_2$ are weight factors, and may be continuously optimized in neural network iterations until optimal values are reached.

The training-terminating condition may be that a quantity of iterations reaches a target quantity, or the loss function becomes relatively stable. Embodiments of the present disclosure is not limited thereto. For example, a batch data size is set to be 32, an initial learning rate is 0.0001, and a weight reduction coefficient of a learning rate is 0.8 in the model training. In such case, when the value of the loss function of the model does not improve in three consecutive iterations, the training is considered to reach convergence and therefore terminates.

The training method in embodiments of the present disclosure can learn a stable hidden feature of a target speaker automatically, without additional PIT processing, speaker tracking mechanism, or processing or adjustment defined by an expert. Moreover, the training based on consistency in embodiments of the present disclosure does not require label information, so that unsupervised information can be mined from massive unlabeled data, which helps improve robustness and versatility of the system. In addition, experiments corresponding to embodiments of the present disclosure have been performed, and a result of the experiments verify the effectiveness of the speech separation model trained based on the consistency between the student model and the teacher model. Under various interference environments and various signal-to-noise ratios (e.g. interference from background music of 0 dB to 20 dB, interference from other speakers, and interference from background noise), the separation performance of the speech separation model obtained in embodiments of the present disclosure has excellent performances in speech quality perceptual evaluation, short-term objective intelligibility, signal-to-distortion ratios, stability, and other factors.

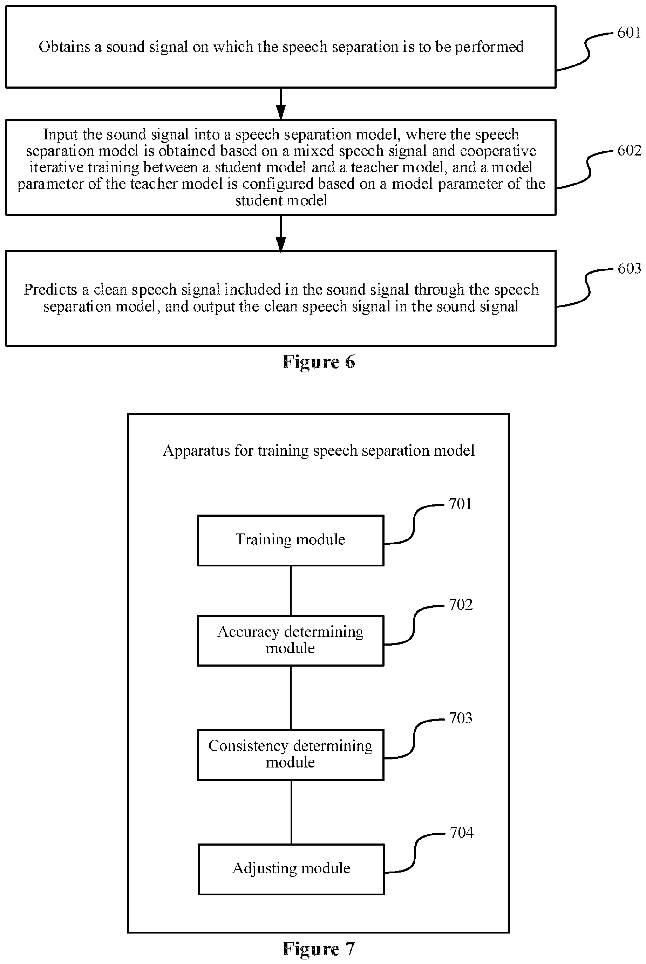

On a basis of the speech separation model obtained through the foregoing training, a method for speech separation is further provided according to embodiments of the present disclosure. Reference is made to Figure 6, which shows a flowchart of a method for speech separation. The method may include following steps 601 to 603.

In step 601, a computer device obtains a sound signal on which the speech separation is to be performed.

In step 602, the computer device inputs the sound signal into a speech separation model. The speech separation model is obtained based on a mixed speech signal and cooperative iterative training between a student model and a teacher model, and a model parameter of the teacher model is configured based on a model parameter of the student model.

In step 603, the computer device predicts a clean speech signal included in the sound signal through the speech separation model, and outputs the clean speech signal in the sound signal.

In an embodiment, a loss function of the cooperative iterative training is constructed based on correctness information between an output of the student model and an input of the student model in the training, and based on consistency information between the output of the student model and an output of the teacher model.

In an embodiment, the loss function of the iteration process is constructed based on any of following combinations of information.

A first combination is correctness information between a first clean speech signal outputted by the student model and a clean speech signal included in the mixed speech signal, and consistency information between the first clean speech signal outputted by the student model and a second clean speech signal outputted by the teacher model.

A second combination is correctness information between a first interfering signal outputted by the student model and an interfering signal included in the mixed speech signal, and consistency information between a first clean speech signal outputted by the student model and a second clean speech signal outputted by the teacher model.

A third combination is first correctness information between a first clean speech signal outputted by the student model and a clean speech signal included in the mixed speech signal, second correctness information between a first interfering signal outputted by the student model and an interfering signal included in the mixed speech signal, first consistency information between the first clean speech signal outputted by the student model and a second clean speech signal outputted by the teacher model, and second consistency information between the first interfering signal outputted by the student model and a second interfering signal outputted by the teacher model.

In an embodiment, the loss function of the iteration process is constructed based on any of following basis.

A first basis includes a short-term time-varying abstract feature outputted by the student model and a short-term time-varying abstract feature outputted by the teacher model.

A second basis includes a short-term time-varying abstract feature outputted by the student model and a short-term time-varying abstract feature outputted by the teacher model, and the short-term time-varying abstract feature outputted by the student model and a long-term stable abstract feature outputted by the teacher model.

The foregoing process of model training process and the forgoing process of speech separation may be performed by different computer devices, respectively. After being trained, the model may be provided to a computer device at a front end or at an application side to execute a speech separation task. The speech separation task may be a subtask for performing speech separation in a task such as speech recognition. After the speech separation is completed, the obtained signal may be further applied to specific processing, such as speech recognition. Embodiments of the present disclosure are not limited thereto.

Figure 7 is a schematic structural diagram of an apparatus for training a speech separation model according to an embodiment of the present disclosure. Reference is made to Figure 7, in which the apparatus includes a training module 701, a correctness determining module 702, a consistency determining module 703, and an adjusting module 704.

The training module 701 is configured to input, in each iteration, a mixed speech signal serving as a training sample into a student model and into a teacher model, where the mixed speech signal is generated based on a clean speech signal and labelled with the clean speech signal, and a model parameter of the teacher model is configured based on a model parameter of the student model.

That is, the training module 701 is configured to process a mixed speech signal through a student model and a teacher model separately, where the mixed speech signal is generated based on a clean speech signal and labelled with the clean speech signal, and a model parameter of the teacher model is configured based on a model parameter of the student model.

The correctness determining module 702 is configured to determine correctness information of such iteration based on a signal outputted by the student model and the clean speech signal, which serves as a label and is included in the mixed speech signal inputted in to the student model, where the correctness information is configured to represent a degree of separation correctness of the student model.

That is, the correctness determining module 702 is configured to determine correctness information based on a signal outputted by the student model and the clean speech signal, which serves as a label and is included in the mixed speech signal, where the correctness information is configured to represent a degree of separation correctness of the student model.

The consistency determining module 703 is configured to determine consistency information in such iteration based on the signal outputted by the student model and a signal outputted by the teacher model, where the consistency information is configured to represent a degree of consistency between a separation capability of the student model and a separation capability of the teacher model.

That is, the consistency determining module 703 is configured to determine consistency information based on the signal outputted by the student model and a signal outputted by the teacher model, where the consistency information is configured to represent a degree of consistency between a separation capability of the student model and a separation capability of the teacher model.

The adjusting module 704 is configured to adjust the model parameter of the student model and the model parameter of the teacher model based on the correctness information and the consistency information determined in each iteration process, until a training-terminating condition is satisfied, and output the student model determined in an iteration process that satisfies the training-terminating condition as the speech separation model.

That is, the adjusting module 704 is configured to adjust the model parameter of the student model and the model parameter of the teacher model based on multiple pieces of the correctness information and multiple pieces of the consistency information to obtain a speech separation model.

In an embodiment, the correctness determining module 702 is configured to perform any of following steps.

The correctness information of such iteration is determined based on a first clean speech signal outputted by the student model and the clean speech signal, which serves as the label and is included in the mixed speech signal.

The correctness information of such iteration is determined based on a first interfering signal outputted by the student model and an interfering signal, which is included in the mixed speech signal and other than the clean speech signal.

First correctness information of such iteration is determined based on a first clean speech signal outputted by the student model and the clean speech signal, which serves as the label and is included in the mixed speech signal. Second correctness information of such iteration is determined based on a first interfering signal outputted by the student model and an interfering signal, which is included in the mixed speech signal and other than the clean speech signal. The correctness information of such iteration is determined according to the first correctness information and the second correctness information.

In an embodiment, the consistency determining module 703 is configured to perform any of following steps.

The consistency information in such iteration is determined based on a first clean speech signal outputted by the student model and a second clean speech signal outputted by the teacher model.

The consistency information in such iteration is determined based on a first interfering signal outputted by the student model and a second interfering signal outputted by the teacher model.

First consistency information in such iteration is determined based on a first clean speech signal outputted by the student model and a second clean speech signal outputted by the teacher model. Second consistency information in such iteration is determined based on a first interfering signal outputted by the student model and a second interfering signal outputted by the teacher model. The consistency information is such iteration is determined according to the first consistency information and the second consistency information.

In an embodiment, the adjusting module 704 is configured to determine the model parameter of the teacher model based on the model parameter of the student model through an exponential-moving-average (EMA) method, and configure the teacher model by using the determined model parameter of the teacher model.

In an embodiment, the consistency determining module 703 is configured to determine third consistency information (i.e. the consistency information) in such iteration based on a short-term time-varying abstract feature of the first clean speech signal and a short-term time-varying abstract feature of the second clean speech signal outputted by the teacher model.

In an embodiment, the consistency determining module 703 is configured to perform following steps.

Third consistency information in such iteration is determined based on a short-term time-varying abstract feature of the first clean speech signal and a short-term time-varying abstract feature of the second clean speech signal.

Fourth consistency information in such iteration is determined based on the short-term time-varying abstract feature of the first clean speech signal and a long-term stable abstract feature of the second clean speech signal.

The consistency information in such iteration is determined based on a sum of the third consistency information that is weighted and the fourth consistency information that is weighted.

In an embodiment, on a basis of the structure as shown in Figure 7, the apparatus further includes an iteration-obtaining module. The iteration-obtaining module is configured to: iterate the step of processing the mixed speech signal through the student model and the teacher model separately, to obtain the multiple pieces of the correctness information and the multiple pieces of the consistency information, where each iteration corresponds to one piece of the correctness information and one piece of the consistency information.

The iteration-obtaining module is further configured to output, in response to that an iteration satisfies a training-terminating condition, the student model determined in the iteration as the speech separation model.

In an embodiment, the student model and the teacher model perform signal separation through permutation-invariant training (PIT), or the student model and the teacher model perform signal separation through salience-based selection.

In the foregoing embodiments, division of the above functional modules is merely an example for illustrating a process in which the apparatus trains the speech separation model. In actual application, the foregoing functions may be allocated to and implemented by different functional modules on requirement. That is, an internal structure of the apparatus is divided into different functional modules to complete all or some of the aforementioned functions. In addition, the apparatus and the method for training the speech separation model in the foregoing embodiments concerns to a same conception. Details of the apparatus embodiments may refer to those of the method embodiments, and are not described herein again.

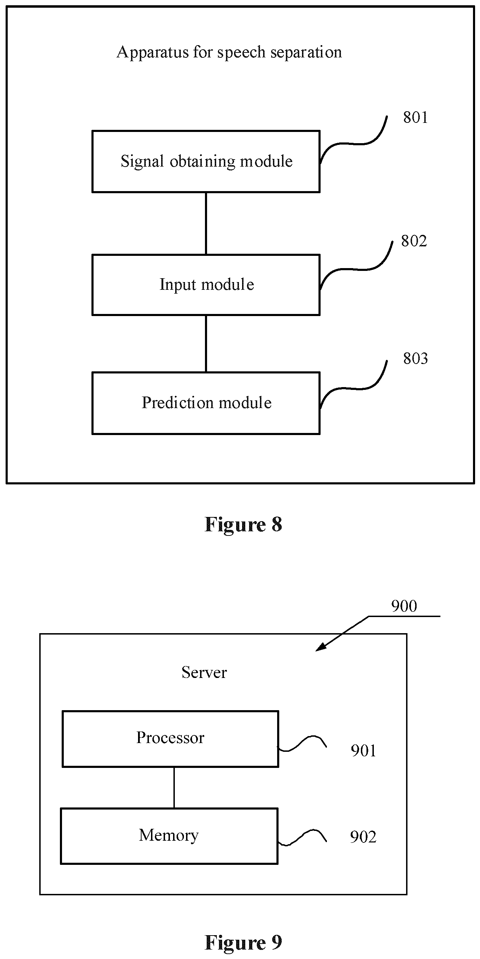

Figure 8 is a schematic structural diagram of an apparatus for speech separation according to an embodiment of the present disclosure. Reference is made to Figure 8, in which the apparatus includes a signal obtaining module 801, an input module 802, and a prediction module 803.

The signal obtaining module 801 is configured to obtain a sound signal on which the speech separation is to be performed.

The input module 802 is configured to input the sound signal into a speech separation model, where the speech separation model is obtained based on a mixed speech signal and cooperative iterative training between a student model and a teacher model, and a model parameter of the teacher model is configured based on a model parameter of the student model.

The prediction module 803 is configured to predict a clean speech signal included in the sound signal through the speech separation model, and output the clean speech signal in the sound signal.

In an embodiment, a loss function of the cooperative iterative training is constructed based on correctness information between an output of the student model and an input of the student model in the training, and based on consistency information between the output of the student model and an output of the teacher model.

In an embodiment, the loss function of the cooperative iterative training is constructed based on any of following combinations of information.

A first combination is correctness information between a first clean speech signal outputted by the student model and a clean speech signal included in the mixed speech signal, and consistency information between the first clean speech signal outputted by the student model and a second clean speech signal outputted by the teacher model.

A second combination is correctness information between a first interfering signal outputted by the student model and an interfering signal included in the mixed speech signal, and consistency information between a first clean speech signal outputted by the student model and a second clean speech signal outputted by the teacher model.

A third combination is first correctness information between a first clean speech signal outputted by the student model and a clean speech signal included in the mixed speech signal, second correctness information between a first interfering signal outputted by the student model and an interfering signal included in the mixed speech signal, first consistency information between the first clean speech signal outputted by the student model and a second clean speech signal outputted by the teacher model, and second consistency information between the first interfering signal outputted by the student model and a second interfering signal outputted by the teacher model.

In an embodiment, the loss function of the cooperative iterative training is constructed based on any of following bases.

A first basis is a short-term time-varying abstract feature outputted by the student model and a short-term time-varying abstract feature outputted by the teacher model.

A second basis is a short-term time-varying abstract feature outputted by the student model and a short-term time-varying abstract feature outputted by the teacher model, and the short-term time-varying abstract feature outputted by the student model and a long-term stable abstract feature outputted by the teacher model.

In the foregoing embodiments, division of the above functional modules is merely an example for illustrating a process in which the apparatus performs speech separation. In actual application, the foregoing functions may be allocated to and implemented by different functional modules on requirement. That is, an internal structure of the apparatus is divided into different functional modules to complete all or some of the aforementioned functions. In addition, the apparatus and the method for speech separation in the foregoing embodiments concerns to a same conception. Details of the apparatus embodiments may refer to those of the method embodiments, and are not described herein again.

In an embodiment, the computer device concerned in the foregoing embodiments includes one or more processors and one or more memories. The one or more memories store at least one computer program, and the at least one computer program is configured to be loaded and executed by the one or more processors to implement following operations.

A mixed speech signal are processed through a student model and a teacher model separately, where the mixed speech signal is generated based on a clean speech signal and labelled with the clean speech signal, and a model parameter of the teacher model is configured based on a model parameter of the student model.

Correctness information is determined based on a signal outputted by the student model and the clean speech signal, which serves as a label and is included in the mixed speech signal, where the correctness information is configured to represent a degree of separation correctness of the student model.

Consistency information is determined based on the signal outputted by the student model and a signal outputted by the teacher model, where the consistency information is configured to represent a degree of consistency between a separation capability of the student model and a separation capability of the teacher model.

The model parameter of the student model and the model parameter of the teacher model are adjusted based on multiple pieces of the correctness information and multiple pieces of the consistency information to obtain a speech separation model.

In an embodiment, the at least one computer program when loaded by the one or more processors is configured to perform any of following operations.

The correctness information is determined based on a first clean speech signal outputted by the student model and the clean speech signal, which serves as the label and is included in the mixed speech signal.

The correctness information is determined based on a first interfering signal outputted by the student model and an interfering signal, which is included in the mixed speech signal and other than the clean speech signal.

First correctness information is determined based on a first clean speech signal outputted by the student model and the clean speech signal, which serves as the label and is included in the mixed speech signal. Second correctness information is determined based on a first interfering signal outputted by the student model and an interfering signal, which is included in the mixed speech signal and other than the clean speech signal. The correctness information is determined according to the first correctness information and the second correctness information.

In an embodiment, the at least one computer program when loaded by the one or more processors is configured to perform any of following operations.

The consistency information is determined based on a first clean speech signal outputted by the student model and a second clean speech signal outputted by the teacher model.

The consistency information is determined based on a first interfering signal outputted by the student model and a second interfering signal outputted by the teacher model.

First consistency information is determined based on a first clean speech signal outputted by the student model and a second clean speech signal outputted by the teacher model. Second consistency information is determined based on a first interfering signal outputted by the student model and a second interfering signal outputted by the teacher model. The consistency information is determined according to the first consistency information and the second consistency information.

In an embodiment, the at least one computer program when loaded by the one or more processors is configured to perform following operations.

The consistency information is determined based on a short-term time-varying abstract feature of the first clean speech signal and a short-term time-varying abstract feature of the second clean speech signal.

In an embodiment, the at least one computer program when loaded by the one or more processors is configured to perform following operations.

Third consistency information is determined based on a short-term time-varying abstract feature of the first clean speech signal and a short-term time-varying abstract feature of the second clean speech signal.

Fourth consistency information is determined based on the short-term time-varying abstract feature of the first clean speech signal and a long-term stable abstract feature of the second clean speech signal.

The consistency information is determined based on a sum of the third consistency information that is weighted and the fourth consistency information that is weighted.

In an embodiment, the at least one computer program when loaded by the one or more processors is configured to perform following operations.

The model parameter of the teacher model is determined based on the model parameter of the student model through an exponential-moving-average (EMA) method, and the teacher model is configured by using the determined model parameter of the teacher model.

In an embodiment, the at least one computer program when loaded by the one or more processors is configured to perform following operations.

The step of processing the mixed speech signal through the student model and the teacher model separately is iterated to obtain the multiple pieces of the correctness information and the multiple pieces of the consistency information, where each iteration corresponds to one piece of the correctness information and one piece of the consistency information.

The at least one computer program is configured to be loaded and executed by the one or more processors to further perform following operations.

In response to that an iteration satisfies a training-terminating condition, the student model determined in the iteration is outputted as the speech separation model.

In an embodiment, the student model and the teacher model perform signal separation through permutation-invariant training (PIT), or the student model and the teacher model perform signal separation through salience-based selection.

In another exemplary embodiment, the computer device concerned in the forgoing embodiments of the present disclosure includes one or more processors and one or more memories. The one or more memories stores at least one computer program, and the at least one computer program when loaded by the one or more processors is configured to perform following operations.

A sound signal, on which the speech separation is to be performed, is obtained.

The sound signal is inputted into a speech separation model, where the speech separation model is obtained based on a mixed speech signal and cooperative iterative training between a student model and a teacher model, and a model parameter of the teacher model is configured based on a model parameter of the student model.

A clean speech signal included in the sound signal is predicted through the speech separation model, and the clean speech signal in the sound signal is outputted.

In an embodiment, a loss function of the cooperative iterative training is constructed based on correctness information between an output of the student model and an input of the student model in the training, and based on consistency information between the output of the student model and an output of the teacher model.

In an embodiment, the loss function of the cooperative iterative training is constructed based on any of following combinations of information.

A first combination is correctness information between a first clean speech signal outputted by the student model and a clean speech signal included in the mixed speech signal, and consistency information between the first clean speech signal outputted by the student model and a second clean speech signal outputted by the teacher model.

A second combination is correctness information between a first interfering signal outputted by the student model and an interfering signal included in the mixed speech signal, and consistency information between a first clean speech signal outputted by the student model and a second clean speech signal outputted by the teacher model.

A third combination is first correctness information between a first clean speech signal outputted by the student model and a clean speech signal included in the mixed speech signal, second correctness information between a first interfering signal outputted by the student model and an interfering signal included in the mixed speech signal, first consistency information between the first clean speech signal outputted by the student model and a second clean speech signal outputted by the teacher model, and second consistency information between the first interfering signal outputted by the student model and a second interfering signal outputted by the teacher model.

In an embodiment, the loss function of the cooperative iterative training is constructed based on any of following bases.

A first basis is a short-term time-varying abstract feature outputted by the student model and a short-term time-varying abstract feature outputted by the teacher model.

A second basis is a short-term time-varying abstract feature outputted by the student model and a short-term time-varying abstract feature outputted by the teacher model, and the short-term time-varying abstract feature outputted by the student model and a long-term stable abstract feature outputted by the teacher model.

The computer device provided in embodiments of the present disclosure may be implemented as a server. Figure 9 is a schematic structural diagram of a server according to an embodiment of the present disclosure. The server 900 may be subject to various changes in correspondence to a different configuration or a different performance, and may include one or more central processing units (CPU) 901 and one or more memories 902. The one or more memories 902 store at least one computer program, and the at least one computer program is configured to be loaded and executed by the one or more processors 901 to implement the method for processing the speech signal (that is, the method for training the speech separation model) or the method for speech separation in the foregoing various embodiments. The server 900 may be further provided with a wired or wireless network interface, a keyboard, an input/output interface, and other components to facilitate input/output. The server 900 may further include other components for implementing a function of the computer device, where details are not described herein.

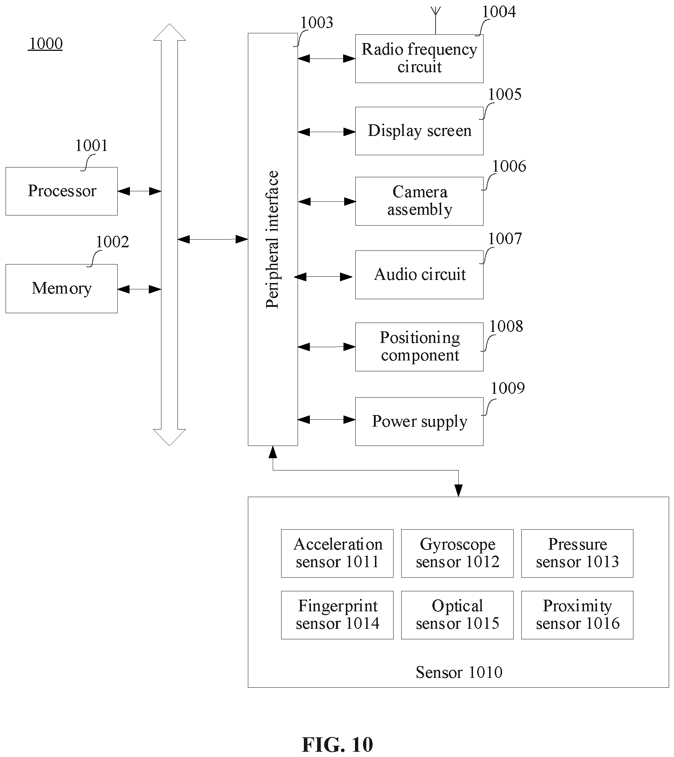

The computer device provided in embodiments of the present disclosure may be implemented as a terminal. Figure 10 is a schematic structural diagram of a terminal according to an embodiment of the present disclosure. The terminal may be configured to perform, on a terminal side, the method in the foregoing embodiments. The terminal 1000 may be a smartphone, a tablet computer, a MP3 (Moving Picture Experts Group Audio Layer III) player, a MP4 (Moving Picture Experts Group Audio Layer IV) player, a notebook computer, or a desktop computer. The terminal 1000 may also be called another name, such as user equipment, a portable terminal, a laptop terminal, or a desktop terminal.

Generally, the terminal 1000 includes one or more processors 1001 and one or more memories 1002.

The processor 1001 may include one or more processing cores, and may be, for example, a 4-core processor or an 8-core processor. The processor 1001 may be implemented in hardware, embodied in at least one of: a digital signal processor (DSP), a field-programmable gate array (FPGA), and a programmable logic array (PLA). The processor 1001 may alternatively include a main processor and a co-processor. The main processor is a processor that is configured to process data in an awaking state, and is also referred to as a central processing unit (CPU). The co-processor is a low-power processor configured to process data in an idle state. In some embodiments, the processor 1001 may be integrated with a graphics processing unit (GPU). The GPU is responsible for rendering and drawing content to be displayed on a display screen. In some embodiments, the processor 1001 may further include an artificial intelligence (AI) processor. The AI processor is configured to process a calculating operation related to machine learning.

The memory 1002 may include one or more computer-readable storage media. The computer-readable storage medium may be non-transient. The memory 1002 may further include a highspeed random access memory, and a non-volatile memory, such as one or more magnetic disk storage devices and a flash storage device. In some embodiments, the non-transitory computer-readable storage medium in the memory 1002 is configured to store at least one instruction. The at least one instruction is configured to be executed by the processor 1001 to implement the method for speech separation or the method for training the speech separation model according to the method embodiments of the present disclosure.

In some optional embodiments, the terminal 1000 may include: a peripheral device interface 1003 and at least one peripheral device. The processor 1001, the memory 1002, and the peripheral device interface 1003 may be connected via a bus or a signal cable. Each peripheral device may be connected to the peripheral device interface 1003 via a bus, a signal cable, or a circuit board. In a specific embodiment, the peripheral device includes at least one of: a radio frequency circuit 1004, a touch screen 1005, a camera component 1006, an audio circuit 1007, a positioning component 1008, and a power supply 1009.

The peripheral device interface 1003 may be configured to connect the at least one peripheral device related to input/output (I/O) to the processor 1001 and the memory 1002. In some embodiments, the processor 1001, the memory 1002, and the peripheral device interface 1003 are integrated on a same chip or a same circuit board. In other embodiments, any one or two of the processor 1001, the memory 1002, and the peripheral device interface 1003 may be implemented on a separate chip or a separate circuit board. This embodiment is not limited thereto.

The radio frequency circuit 1004 is configured to receive and transmit a radio frequency (RF) signal, also called an electromagnetic signal. The RF circuit 1004 communicates with a communication network and another communication device through the electromagnetic signal. The RF circuit 1004 converts an electric signal into an electromagnetic signal for transmission, or converts a received electromagnetic signal into an electric signal. In some embodiments, the RF circuit 1004 includes: an antenna system, an RF transceiver, one or more amplifiers, a tuner, an oscillator, a digital signal processor, a codec chip set, a subscriber identity module card, and the like. The RF circuit 1004 may communicate with another terminal through at least one wireless communication protocol. The wireless communication protocol includes, but is not limited to, a metropolitan area network, a generation of a mobile communication network (2G, 3G, 4G, or 5G), a wireless local area network, and/or a wireless fidelity (WiFi) network. In some embodiments, the RF circuit 1004 may include a circuit related to near field communication (NFC). The present disclosure is not limited thereto.

The display screen 1005 is configured to display a user interface (UI). The UI may include a graphic, a text, an icon, a video, and any combination of the above. When the display screen 1005 is a touch screen, the display screen 1005 is further capable collect a touch signal on or above a surface of the display screen 1005. The touch signal may be inputted into the processor 1001 as a control signal for processing. In such case, the display screen 1005 may be further configured to provide a virtual button and/or a virtual keyboard, also called a soft button and/or a soft keyboard. In some embodiments, a quantity of the display screen 1005 may be one, and the display screen 1005 is disposed on a front panel of the terminal 1000. In other embodiments, there may be two display screens 1005, which are disposed on different surfaces, respectively, of the terminal 1000, or are designed in a foldable form. In other embodiments, the display screen 1005 may be a flexible display screen, disposed on a curved surface or a folded surface of the terminal 1000. The display screen 1005 may even be configured to have a non-rectangular irregular shape, that is, a specially shaped screen. The display screen 1005 may be manufactured as, for example, a liquid crystal display (LCD), or an organic light-emitting diode (OLED).

The camera component 1006 is configured to collect an image or a video. In some embodiments, the camera component 1006 includes a front-facing camera and a rear-facing camera. Generally, the front-facing camera is disposed on a front panel of the terminal, and the rear-facing camera is disposed on a back surface of the terminal. In some embodiments, there are at least two rear-facing cameras, each of which is any of a main camera, a depth-of-field camera, a wide-angle camera, and a telephoto camera, so as to implement a background-blurring function through fusion between the main camera and the depth-of-field camera, panoramic shooting and virtual-reality (VR) shooting functions through fusion between the main camera and wide-angle camera, or another fusion-shooting function. In some embodiments, the camera component 1006 may further include a flash light. The flash light may be a mono-color-temperature flash light or a dual-color-temperature flash light. The dual-color-temperature flash light refers to a combination of a warm-color flash light and a cold-color flash light, and may be configured to perform light compensation under different color temperatures.

The audio circuit 1007 may include a microphone and a loudspeaker. The microphone is configured to collect sound waves of a user and an environment, convert the sound waves into electrical signals, and input the electrical signals into the processor 1001 for processing or into the RF circuit 1004 for speech communication. Multiple microphones may be disposed at different portions of the terminal 1000 for stereo collection or noise reduction. The microphone may alternatively be a microphone array or an omnidirectional collection microphone. The loudspeaker is configured to convert electrical signals from the processor 1001 or the RF circuit 1004 into sound waves. The loudspeaker may be a conventional thin-film loudspeaker or a piezoelectric ceramic loudspeaker. When the loudspeaker is the piezoelectric ceramic loudspeaker, electrical signals can be converted into not only sound waves audible to human, but also inaudible sound waves for ranging or the like. In some embodiments, the audio circuit 1007 may further include an earphone jack.

The positioning component 1008 is configured to determine a current geographic location of the terminal 1000 for navigation or a location-based service (LBS). The positioning component 1008 may be a positioning component based on the global positioning system (GPS) of the United States, the COMPASS System of China, the GLONASS System of Russia, or the GALILEO System of the European Union.

The power supply 1009 is configured to supply power to a component in the terminal 1000. The power supply 1009 may be an alternating current, a direct current, a primary battery, or a rechargeable battery. When the power supply 1009 includes the rechargeable battery, the rechargeable battery may be a wired rechargeable battery or a wireless rechargeable battery. The rechargeable battery may be further configured to support fast-charge technology.

In some embodiments, the terminal 1000 may also include one or more sensors 1010. The one or more sensors 1010 include, but are not limited to, an acceleration sensor 1011, a gyroscope sensor 1010, a pressure sensor 1013, a fingerprint sensor 1014, an optical sensor 1015, and a proximity sensor 1016.

The acceleration sensor 1011 may detect magnitude of acceleration on three coordinate axes of a coordinate system established with the terminal 1000. For example, the acceleration sensor 1011 may be configured to detect components of gravity acceleration along the three coordinate axes. The processor 1001 may control the touch screen 1005 to display the user interface in a landscape view or a portrait view, according to a gravity acceleration signal collected by the acceleration sensor 1011. The acceleration sensor 1011 may be further configured to collect motion data of a game or a user.

The gyroscope sensor 1010 may detect a body direction and a rotation angle of the terminal 1000. The gyroscope sensor 1010 may cooperate with the acceleration sensor 1011 to collect a 3D action performed by the user on the terminal 1000. The processor 1001 may implement following functions according to data collected by the gyroscope sensor 1010: motion sensing (for example, the UI is changed according to a tilt operation of the user), image stabilization during shooting, game control, and inertial navigation.

The pressure sensor 1013 may be disposed on a side frame of the terminal 1000 and/or a lower layer of the touch screen 1005. When the pressure sensor 1013 is disposed on the side frame of the terminal 1000, a gripping signal of the user on the terminal 1000 may be detected. The processor 1001 performs left-or-right hand recognition or a quick operation according to the gripping signal collected by the pressure sensor 1013. When the pressure sensor 1013 is disposed on a bottom layer of the touch screen 1005, the processor 1001 controls an operable widget on the UI, according to a pressure operation performed by the user on the touch screen 1005. The operable widget includes at least one of: a button widget, a scroll bar widget, an icon widget, and a menu widget.

The fingerprint sensor 1014 is configured to collect a fingerprint of the user. The processor 1001 identifies an identity of the user according to the fingerprint collected by the fingerprint sensor 1014, or the fingerprint sensor 1014 identifies an identity of the user according to the collected fingerprint. When the identity of the user is identified as a trusted identity, the processor 1001 authorizes the user to perform a related sensitive operation. The sensitive operation includes unlocking a screen, viewing encrypted information, downloading software, payment, changing settings, or the like. The fingerprint sensor 1014 may be disposed on a front side, a back side, or a lateral side of the terminal 1000. In a case that a physical button or a vendor logo is disposed on the terminal 1000, the fingerprint 1014 may be integrated with the physical button or the vendor logo.

The optical sensor 1015 is configured to collect an intensity of ambient light. In an embodiment, the processor 1001 may control luminance of the touch screen 1005 according to the intensity of ambient light collected by the optical sensor 1015. In a specific embodiment, the luminance of the touch screen 1005 is increased in case of high intensity of the ambient light, and the luminance of the touch screen 1005 is reduced in case of low intensity of the ambient light. In another embodiment, the processor 1001 may further adjust a camera parameter of the camera component 1006 dynamically according to the intensity of ambient light collected by the optical sensor 1015.

The proximity sensor 1016, also called a distance sensor, is generally disposed on the front panel of the terminal 1000. The proximity sensor 1016 is configured to collect a distance between the user and a front surface of the terminal 1000. In an embodiment, when the proximity sensor 1016 detects that the distance between the user and the front surface of the terminal 1000 is decreasing, the processor 1001 controls the touch screen 1005 to switch from a screen-on state to a screen-off state. When the proximity sensor 1016 detects that the distance between the user and the front surface of the terminal 1000 is increasing, the processor 1001 controls the touch screen 1005 to switch from the screen-off state to the screen-on state.

A person skilled in the art may understand that the structure shown in Figure 10 constitutes no limitation on the terminal 1000, and the terminal may include more or fewer components than those shown in the figure, or some components may be combined, or a different component deployment may be used.

In an embodiment, a computer-readable storage medium such as a memory is further provided. The computer-readable storage includes a computer program, and the computer program may be executed by a processor to implement the method for speech separation or the method for training the speech separation model in the foregoing embodiments. For example, the computer-readable storage medium may be a read-only memory (ROM), a RAM, a compact disc ROM (CD-ROM), a magnetic tape, a floppy disk, an optical data storage device, or the like.

In an exemplary embodiment, the at least one computer program stored in the computer-readable storage medium when loaded by the processor is configured to perform following operations.

A mixed speech signal are processed through a student model and a teacher model separately, where the mixed speech signal is generated based on a clean speech signal and labelled with the clean speech signal, and a model parameter of the teacher model is configured based on a model parameter of the student model.

Correctness information is determined based on a signal outputted by the student model and the clean speech signal, which serves as a label and is included in the mixed speech signal, where the correctness information is configured to represent a degree of separation correctness of the student model.

Consistency information is determined based on the signal outputted by the student model and a signal outputted by the teacher model, where the consistency information is configured to represent a degree of consistency between a separation capability of the student model and a separation capability of the teacher model.

The model parameter of the student model and the model parameter of the teacher model are adjusted based on multiple pieces of the correctness information and multiple pieces of the consistency information to obtain a speech separation model.

In an embodiment, the at least one computer program when loaded by the processor is configured to perform any of following operations.

The correctness information is determined based on a first clean speech signal outputted by the student model and the clean speech signal, which serves as the label and is included in the mixed speech signal.

The correctness information is determined based on a first interfering signal outputted by the student model and an interfering signal, which is included in the mixed speech signal and other than the clean speech signal.

First correctness information is determined based on a first clean speech signal outputted by the student model and the clean speech signal, which serves as the label and is included in the mixed speech signal. Second correctness information is determined based on a first interfering signal outputted by the student model and an interfering signal, which is included in the mixed speech signal and other than the clean speech signal. The correctness information is determined according to the first correctness information and the second correctness information.

In an embodiment, the at least one computer program when loaded by the processor is configured to perform any of following operations.

The consistency information is determined based on a first clean speech signal outputted by the student model and a second clean speech signal outputted by the teacher model.

The consistency information is determined based on a first interfering signal outputted by the student model and a second interfering signal outputted by the teacher model.

First consistency information is determined based on a first clean speech signal outputted by the student model and a second clean speech signal outputted by the teacher model. Second consistency information is determined based on a first interfering signal outputted by the student model and a second interfering signal outputted by the teacher model. The consistency information is determined according to the first consistency information and the second consistency information.

In an embodiment, the at least one computer program when loaded by the processor is configured to perform following operations.

The consistency information is determined based on a short-term time-varying abstract feature of the first clean speech signal and a short-term time-varying abstract feature of the second clean speech signal.

In an embodiment, the at least one computer program when loaded by the processor is configured to perform following operations.

Third consistency information is determined based on a short-term time-varying abstract feature of the first clean speech signal and a short-term time-varying abstract feature of the second clean speech signal.

Fourth consistency information is determined based on the short-term time-varying abstract feature of the first clean speech signal and a long-term stable abstract feature of the second clean speech signal.

The consistency information is determined based on a sum of the third consistency information that is weighted and the fourth consistency information that is weighted.

In an embodiment, the at least one computer program when loaded by the processor is configured to perform following operations. The model parameter of the teacher model is determined based on the model parameter of the student model through an exponential-moving-average method, and the teacher model is configured by using the determined model parameter of the teacher model.

In an embodiment, the at least one computer program when loaded by the processor is configured to perform following operations.

The step of processing the mixed speech signal through the student model and the teacher model separately is iterated to obtain the multiple pieces of the correctness information and the multiple pieces of the consistency information, where each iteration corresponds to one piece of the correctness information and one piece of the consistency information.

In an embodiment, the at least one computer program when loaded by the processor is further configured to perform following operations.

In response to that an iteration satisfies a training-terminating condition, the student model determined in the iteration is outputted as the speech separation model.

In an embodiment, the student model and the teacher model perform signal separation through permutation-invariant training (PIT), or the student model and the teacher model perform signal separation through salience-based selection.

In another embodiment, the at least one computer program stored in the computer-readable storage medium when loaded by the processor is configured to perform following operations.

A sound signal, on which the speech separation is to be performed, is obtained.

The sound signal is inputted into a speech separation model, where the speech separation model is obtained based on a mixed speech signal and cooperative iterative training between a student model and a teacher model, and a model parameter of the teacher model is configured based on a model parameter of the student model.

A clean speech signal included in the sound signal is predicted through the speech separation model, and the clean speech signal in the sound signal is outputted.

In an embodiment, a loss function of the cooperative iterative training is constructed based on correctness information between an output of the student model and an input of the student model in the training, and based on consistency information between the output of the student model and an output of the teacher model.

In an embodiment, the loss function of the cooperative iterative training is constructed based on any of following combinations of information.

A first combination is correctness information between a first clean speech signal outputted by the student model and a clean speech signal included in the mixed speech signal, and consistency information between the first clean speech signal outputted by the student model and a second clean speech signal outputted by the teacher model.

A second combination is correctness information between a first interfering signal outputted by the student model and an interfering signal included in the mixed speech signal, and consistency information between a first clean speech signal outputted by the student model and a second clean speech signal outputted by the teacher model.

A third combination is first correctness information between a first clean speech signal outputted by the student model and a clean speech signal included in the mixed speech signal, second correctness information between a first interfering signal outputted by the student model and an interfering signal included in the mixed speech signal, first consistency information between the first clean speech signal outputted by the student model and a second clean speech signal outputted by the teacher model, and second consistency information between the first interfering signal outputted by the student model and a second interfering signal outputted by the teacher model.

In an embodiment, the loss function of the cooperative iterative training is constructed based on any of following bases.

A first basis is a short-term time-varying abstract feature outputted by the student model and a short-term time-varying abstract feature outputted by the teacher model.

A second basis is a short-term time-varying abstract feature outputted by the student model and a short-term time-varying abstract feature outputted by the teacher model, and the short-term time-varying abstract feature outputted by the student model and a long-term stable abstract feature outputted by the teacher model.

A computer program product or a computer program is further provided according to embodiments of the present disclosure. The computer program product or the computer program including one or more program codes, and the one or more program codes are stored in a computer-readable storage medium. One or more processors of a computer device is capable to read the one or more program codes from the computer-readable storage medium, and the one or more processors when executing the one or more program codes enables the computer device to perform the method for processing the speech signal or the method for speech separation described in the foregoing embodiments.

Those skilled in the art may understand that all or some of the steps of the foregoing embodiments may be implemented in hardware, or may be implemented as a program instructing related hardware. The program may be stored in a computer-readable storage medium. The storage medium may be a ROM, a magnetic disk, or an optical disc.

The foregoing descriptions are merely optional embodiments of the present disclosure, and are not intended for limiting the present disclosure.

**Claims**

1. A method for processing a speech signal, comprising:

   processing a mixed speech signal through a student model and a teacher model separately, wherein the mixed speech signal is generated by mixing a clean speech signal and an interfering signal and labelled with the clean speech signal, and a first model parameter of the teacher model is configured based on a second model parameter of the student model;

   determining correctness information based on a signal outputted by the student model and the clean speech signal, wherein the correctness information is configured to represent a degree of separation correctness of the student model;

   determining consistency information based on the signal outputted by the student model and a signal outputted by the teacher model, wherein the consistency information is configured to represent a degree of consistency between a first separation capability of the teacher model and a second separation capability of the student model; and

   adjusting the first model parameter and the second model parameter based on a plurality of pieces of the correctness information and a plurality of pieces of the consistency information to obtain a speech separation model.

2. The method according to claim 1, wherein determining the correctness information based on the signal outputted by the student model and the clean speech signal comprises:

   determining the correctness information based on a first clean speech signal outputted by the student model and the clean speech signal, which serves as the label and is comprised in the mixed speech signal;

   determining the correctness information based on a first interfering signal outputted by the student model and an interfering signal, which is comprised in the mixed speech signal and other than the clean speech signal; or

   determining first correctness information based on a first clean speech signal outputted by the student model and the clean speech signal, which serves as the label and is comprised in the mixed speech signal; determining second correctness information based on a first interfering signal outputted by the student model and an interfering signal, which is comprised in the mixed speech signal and other than the clean speech signal; and determining the correctness information according to the first correctness information and the second correctness information.

3. The method according to claim 1 or 2, wherein determining the consistency information based on the signal outputted by the student model and the signal outputted by the teacher model comprises:

   determining the consistency information based on a first clean speech signal outputted by the student model and a second clean speech signal outputted by the teacher model;

   determining the consistency information based on a first interfering signal outputted by the student model and a second interfering signal outputted by the teacher model; or

   determining first consistency information based on a first clean speech signal outputted by the student model and a second clean speech signal outputted by the teacher model; determining second consistency information based on a first interfering signal outputted by the student model and a second interfering signal outputted by the teacher model; and determining the consistency information according to the first consistency information and the second consistency information.

4. The method according to claim 3, wherein determining the consistency information based on the first clean speech signal outputted by the student model and the second clean speech signal outputted by the teacher model comprises: determining the consistency information based on a short-term time-varying abstract feature of the first clean speech signal and a short-term time-varying abstract feature of the second clean speech signal.

5. The method according to claim 3, wherein determining the consistency information based on the first clean speech signal outputted by the student model and the second clean speech signal outputted by the teacher model comprises:

determining third consistency information based on a short-term time-varying abstract feature of the first clean speech signal and a short-term time-varying abstract feature of the second clean speech signal;
determining fourth consistency information based on the short-term time-varying abstract feature of the first clean speech signal and a long-term stable abstract feature of the second clean speech signal; and
determining the consistency information based on a sum of the third consistency information that is weighted and the fourth consistency information that is weighted.

6.  The method according to any one of claims 1 to 5, wherein adjusting the first model parameter and the second model parameter comprises:

determining the first model parameter based on the second model parameter through an exponential-moving-average method, and
configuring the teacher model by using the determined first model parameter.

7.  The method according to any one of claims 1 to 6, further comprising:

iterating the step of processing the mixed speech signal through the student model and the teacher model separately, to obtain the plurality of pieces of the correctness information and the plurality of pieces of the consistency information, wherein each iteration corresponds to one of the plurality of pieces of the correctness information and one of the plurality of pieces of the consistency information;
wherein obtaining the speech separation model comprises:
outputting, in response to that an iteration satisfies a training-terminating condition, the student model determined in the iteration as the speech separation model.

8.  The method according to any one of claims 1 to 7, wherein:

the student model and the teacher model perform signal separation through permutation-invariant training, or
the student model and the teacher model perform signal separation through salience-based selection.

9.  A method for speech separation, executable by a computer device, comprising:

training a speech separation model through the method according to any one of claims 1 to 8;
obtaining a sound signal on which the speech separation is to be performed;
inputting the sound signal into the speech separation model; and
predicting a clean speech signal comprised in the sound signal through the speech separation model, and outputting the clean speech signal in the sound signal.

10. An apparatus for processing a speech signal, comprising: a plurality of modules each for performing a step of the method according to any one of claims 1 to 9.

11. A computer device, comprising:

one or more processors; and
one or more memories storing at least one computer program;
wherein the at least one computer program when loaded by the one or more processors is configured to perform the method according to any one of claims 1 to 9.

12. A computer-readable storage medium, storing at least one computer program, wherein
the at least one computer program when loaded by one or more processors is configured to perform the method according to any one of claims 1 to 9.

**Patentansprüche**

1.  Verfahren zur Verarbeitung eines Sprachsignals, umfassend:

Verarbeiten eines gemischten Sprachsignals durch ein Schülermodell und ein Lehrermodell getrennt, wobei das gemischte Sprachsignal durch Mischen eines reinen Sprachsignals und eines Störsignals erzeugt und mit dem reinen Sprachsignal gekennzeichnet wird und ein erster Modellparameter des Lehrermodells auf der Grundlage eines zweiten Modellparameters des Schülermodells konfiguriert ist;

Bestimmen von Korrektheitsinformationen auf der Grundlage eines von dem Schülermodell ausgegebenen Signals und des reinen Sprachsignals, wobei die Korrektheitsinformationen so konfiguriert sind, dass sie einen Grad der Trennungskorrektheit des Schülermodells darstellen;

Bestimmen von Konsistenzinformationen auf der Grundlage des von dem Schülermodell ausgegebenen Signals und eines von dem Lehrermodell ausgegebenen Signals, wobei die Konsistenzinformationen so konfiguriert sind, dass sie einen Grad der Konsistenz zwischen einer ersten Trennfähigkeit des Lehrermodells und einer zweiten Trennfähigkeit des Schülermodells darstellen; und

Einstellen des ersten Modellparameters und des zweiten Modellparameters auf der Grundlage mehrerer Teile der Korrektheitsinformation und mehrerer Teile der Konsistenzinformation, um ein Sprachtrennungsmodell zu erhalten.

2. Verfahren nach Anspruch 1, wobei das Bestimmen der Korrektheitsinformation auf der Grundlage des von dem Schülermodell ausgegebenen Signals und des reinen Sprachsignals umfasst:

Bestimmen der Korrektheitsinformation auf der Grundlage eines ersten reinen Sprachsignals, das von dem Schülermodell ausgegeben wird, und des reinen Sprachsignals, das als Kennzeichnung dient und in dem gemischten Sprachsignal enthalten ist;

Bestimmen der Korrektheitsinformation auf der Grundlage eines ersten Störsignals, das von dem Schülermodell ausgegeben wird, und eines Störsignals, das in dem gemischten Sprachsignal enthalten ist und sich von dem reinen Sprachsignal unterscheidet; oder

Bestimmen einer ersten Korrektheitsinformation auf der Grundlage eines ersten reinen Sprachsignals, das von dem Schülermodell ausgegeben wird, und des reinen Sprachsignals, das als das Kennzeichnung dient und in dem gemischten Sprachsignal enthalten ist; Bestimmen einer zweiten Korrektheitsinformation auf der Grundlage eines ersten Störsignals, das von dem Schülermodell ausgegeben wird, und eines Störsignals, das in dem gemischten Sprachsignal enthalten ist und sich von dem reinen Sprachsignal unterscheidet; und Bestimmen der Korrektheitsinformation gemäß der ersten Korrektheitsinformation und der zweiten Korrektheitsinformation.

3. Verfahren nach Anspruch 1 oder 2, wobei das Bestimmen der Konsistenzinformation auf der Grundlage des von dem Schülermodell ausgegebenen Signals und des von dem Lehrermodell ausgegebenen Signals umfasst:

Bestimmen der Konsistenzinformation auf der Grundlage eines ersten reinen Sprachsignals, das von dem Schülermodell ausgegeben wird, und eines zweiten reinen Sprachsignals, das von dem Lehrermodell ausgegeben wird;

Bestimmen der Konsistenzinformation auf der Grundlage eines ersten Störsignals, das von dem Schülermodell ausgegeben wird, und eines zweiten Störsignals, das von dem Lehrermodell ausgegeben wird; oder

Bestimmen einer ersten Konsistenzinformation auf der Grundlage eines ersten reinen Sprachsignals, das von dem Schülermodell ausgegeben wird, und eines zweiten reinen Sprachsignals, das von dem Lehrermodell ausgegeben wird; Bestimmen einer zweiten Konsistenzinformation auf der Grundlage eines ersten Störsignals, das von dem Schülermodell ausgegeben wird, und eines zweiten Störsignals, das von dem Lehrermodell ausgegeben wird; und Bestimmen der Konsistenzinformation gemäß der ersten Konsistenzinformation und der zweiten Konsistenzinformation.

4. Verfahren nach Anspruch 3, wobei das Bestimmen der Konsistenzinformation auf der Grundlage des ersten reinen Sprachsignals, das von dem Schülermodell ausgegeben wird, und des zweiten reinen Sprachsignals, das von dem Lehrermodell ausgegeben wird, umfasst:

Bestimmen der Konsistenzinformation auf der Grundlage eines kurzzeitigen, zeitlich variierenden abstrakten Merkmals des ersten reinen Sprachsignals und eines kurzzeitigen, zeitlich variierenden abstrakten Merkmals des zweiten reinen Sprachsignals.

5. Verfahren nach Anspruch 3, wobei das Bestimmen der Konsistenzinformation auf der Grundlage des ersten reinen Sprachsignals, das von dem Schülermodell ausgegeben wird, und des zweiten reinen Sprachsignals, das von dem Lehrermodell ausgegeben wird, umfasst:

Bestimmen einer dritten Konsistenzinformation auf der Grundlage eines kurzzeitigen, zeitlich variierenden abstrakten Merkmals des ersten reinen Sprachsignals und eines kurzzeitigen, zeitlich variierenden abstrakten Merkmals des zweiten reinen Sprachsignals;

Bestimmen einer vierten Konsistenzinformation auf der Grundlage des kurzzeitigen, zeitlich variierenden abstrakten Merkmals des ersten reinen Sprachsignals und eines langzeitigen stabilen abstrakten Merkmals des zweiten reinen Sprachsignals; und

Bestimmen der Konsistenzinformation basierend auf einer Summe der dritten Konsistenzinformation, die gewichtet ist, und der vierten Konsistenzinformation, die gewichtet ist.

**6.** Verfahren nach einem der Ansprüche 1 bis 5, wobei das Anpassen des ersten Modellparameters und des zweiten Modellparameters umfasst:

Bestimmen des ersten Modellparameters auf der Grundlage des zweiten Modellparameters durch ein Verfahren mit exponentiell gleitendem Mittelwert, und

Konfigurieren des Lehrermodells unter Verwendung des bestimmten ersten Modellparameters.

**7.** Verfahren nach einem der Ansprüche 1 bis 6, ferner umfassend:

Iterieren des Schritts des Verarbeitens des gemischten Sprachsignals durch das Schülermodell und das Lehrermodell getrennt, um die mehreren Teile der Korrektheitsinformation und die mehreren Teile der Konsistenzinformation zu erhalten, wobei jede Iteration einem der mehreren Teile der Korrektheitsinformation und einem der mehreren Teile der Konsistenzinformation entspricht;

wobei das Erhalten des Sprachtrennungsmodells umfasst:

Ausgeben des in der Iteration bestimmten Schülermodells als das Sprachtrennungsmodell in Reaktion darauf, dass eine Iteration eine Trainingsbeendigungsbedingung erfüllt.

**8.** Verfahren nach einem der Ansprüche 1 bis 7, wobei:

das Schülermodell und das Lehrermodell eine Signaltrennung durch permutationsinvariantes Training durchführen, oder

das Schülermodell und das Lehrermodell eine Signaltrennung durch salienzbasierte Auswahl durchführen.

**9.** Verfahren zur Sprachtrennung, ausführbar durch eine Computervorrichtung, umfassend:

Trainieren eines Sprachtrennungsmodells durch das Verfahren nach einem der Ansprüche 1 bis 8;

Gewinnen eines Tonsignals, an dem die Sprachseparation durchgeführt werden soll;

Eingeben des Tonsignals in das Sprachtrennungsmodell; und

Vorhersagen eines reinen Sprachsignals, das in dem Tonsignal enthalten ist, durch das Sprachtrennungsmodell und Ausgeben des reinen Sprachsignals in dem Tonsignal.

**10.** Vorrichtung zur Verarbeitung eines Sprachsignals, mit: einer Vielzahl von Modulen, die jeweils einen Schritt des Verfahrens nach einem der Ansprüche 1 bis 9 ausführen.

**11.** Computervorrichtung, umfassend:

einen oder mehrere Prozessoren; und

einen oder mehrere Speicher, die mindestens ein Computerprogramm speichern;

wobei das mindestens eine Computerprogramm, wenn es von dem einen oder den mehreren Prozessoren geladen wird, so konfiguriert ist, dass es das Verfahren nach einem der Ansprüche 1 bis 9 ausführt.

**12.** Computerlesbares Speichermedium, das mindestens ein Computerprogramm speichert, wobei das mindestens eine Computerprogramm, wenn es von einem oder mehreren Prozessoren geladen wird, so konfiguriert ist, dass es das Verfahren nach einem der Ansprüche 1 bis 9 ausführt.

**Revendications**

**1.** Procédé de traitement d'un signal de parole, comprenant :

le traitement d'un signal de parole mélangé via un modèle d'étudiant et un modèle d'enseignant séparément, dans lequel le signal de parole mélangé est généré en mélangeant un signal de parole propre et un signal d'interférence et étiqueté avec le signal de parole propre, et un premier paramètre de modèle du modèle d'enseignant est configuré sur la base d'un deuxième paramètre de modèle du modèle d'étudiant ;

la détermination d'informations d'exactitude sur la base d'un signal délivré par le modèle d'étudiant et du signal de parole propre, dans lequel les informations d'exactitude sont configurées pour représenter un degré d'exactitude de séparation du modèle d'étudiant ;

la détermination d'informations de cohérence sur la base du signal délivré par le modèle d'étudiant et d'un signal délivré par le modèle d'enseignant, dans lequel les informations de cohérence sont configurées pour représenter un degré de cohérence entre une première capacité de séparation du modèle d'enseignant et une deuxième capacité de séparation du modèle d'étudiant ; et

le réglage du premier paramètre de modèle et du deuxième paramètre de modèle sur la base d'une pluralité d'informations des informations d'exactitude et d'une pluralité d'informations des informations de cohérence pour obtenir un modèle de séparation de parole.

2. Procédé selon la revendication 1, dans lequel la détermination des informations d'exactitude sur la base du signal délivré par le modèle d'étudiant et du signal de parole propre comprend :

la détermination des informations d'exactitude sur la base d'un premier signal de parole propre délivré par le modèle d'étudiant et du signal de parole propre, qui sert d'étiquette et est compris dans le signal de parole mélangé ;

la détermination des informations d'exactitude sur la base d'un premier signal d'interférence délivré par le modèle d'étudiant et d'un signal d'interférence, qui est compris dans le signal de parole mélangé et différent du signal de parole propre ; ou

la détermination de premières informations d'exactitude sur la base d'un premier signal de parole propre délivré par le modèle d'étudiant et du signal de parole propre, qui sert d'étiquette et est compris dans le signal de parole mélangé ; la détermination de deuxièmes informations d'exactitude sur la base d'un premier signal d'interférence délivré par le modèle d'étudiant et d'un signal d'interférence, qui est compris dans le signal de parole mélangé et différent du signal de parole propre ; et la détermination des informations d'exactitude selon les premières informations d'exactitude et les deuxièmes informations d'exactitude.

3. Procédé selon la revendication 1 ou 2, dans lequel la détermination des informations de cohérence sur la base du signal délivré par le modèle d'étudiant et du signal délivré par le modèle d'enseignant comprend :

la détermination des informations de cohérence sur la base d'un premier signal de parole propre délivré par le modèle d'étudiant et d'un deuxième signal de parole propre délivré par le modèle d'enseignant ;

la détermination des informations de cohérence sur la base d'un premier signal d'interférence délivré par le modèle d'étudiant et d'un deuxième signal d'interférence délivré par le modèle d'enseignant ; ou

la détermination de premières informations de cohérence sur la base d'un premier signal de parole propre délivré par le modèle d'étudiant et d'un deuxième signal de parole propre délivré par le modèle d'enseignant ; la détermination de deuxièmes informations de cohérence sur la base d'un premier signal d'interférence délivré par le modèle d'étudiant et d'un deuxième signal d'interférence délivré par le modèle d'enseignant ; et la détermination des informations de cohérence à partir des premières informations de cohérence et des deuxièmes informations de cohérence.

4. Procédé selon la revendication 3, dans lequel la détermination des informations de cohérence sur la base du premier signal de parole propre délivré par le modèle d'étudiant et du deuxième signal de parole propre délivré par le modèle d'enseignant comprend :
la détermination des informations de cohérence sur la base d'une caractéristique abstraite variable dans le temps à court terme du premier signal de parole propre et d'une caractéristique abstraite variable dans le temps à court terme du deuxième signal de parole propre.

5. Procédé selon la revendication 3, dans lequel la détermination des informations de cohérence sur la base du premier signal de parole propre délivré par le modèle d'étudiant et du deuxième signal de parole propre délivré par le modèle d'enseignant comprend :

la détermination de troisièmes informations de cohérence sur la base d'une caractéristique abstraite variable dans le temps à court terme du premier signal de parole propre et d'une caractéristique abstraite variable dans le temps à court terme du deuxième signal de parole propre ;
la détermination de quatrièmes informations de cohérence sur la base de la caractéristique abstraite variable dans le temps à court terme du premier signal de parole propre et d'une caractéristique abstraite stable à long terme du deuxième signal de parole propre ; et
la détermination des informations de cohérence sur la base d'une somme des troisièmes informations de cohérence qui sont pondérées et des quatrièmes informations de cohérence qui sont pondérées.

6. Procédé selon l'une quelconque des revendications 1 à 5, dans lequel le réglage du premier paramètre de modèle et du deuxième paramètre de modèle comprend :

la détermination du premier paramètre de modèle sur la base du deuxième paramètre de modèle via une méthode de moyenne mobile exponentielle, et
la configuration du modèle d'enseignant en utilisant le premier paramètre de modèle déterminé.

7. Procédé selon l'une quelconque des revendications 1 à 6, comprenant en outre :

l'itération de l'étape de traitement du signal de parole mélangé via le modèle d'étudiant et le modèle d'enseignant séparément, pour obtenir la pluralité d'informations des informations d'exactitude et la pluralité d'informations des informations de cohérence, dans lequel chaque itération correspond à une de la pluralité d'informations des informations d'exactitude et une de la pluralité d'informations des informations de cohérence ;
dans lequel l'obtention du modèle de séparation de parole comprend :
la délivrance, en réponse au fait qu'une itération remplit une condition de fin d'apprentissage, du modèle d'étudiant déterminé dans l'itération en tant que modèle de séparation de parole.

8. Procédé selon l'une quelconque des revendications 1 à 7, dans lequel :

le modèle d'étudiant et le modèle d'enseignant réalisent une séparation de signal via un apprentissage invariant par permutation, ou
le modèle d'étudiant et le modèle d'enseignant réalisent une séparation de signal via une sélection sur la base d'une saillance.

9. Procédé pour la séparation de parole, exécutable par un dispositif informatique, comprenant :

l'apprentissage d'un modèle de séparation de parole via un procédé selon l'une quelconque des revendications 1 à 8 ;
l'obtention d'un signal sonore sur lequel la séparation de parole est destinée à être réalisée ;
l'introduction du signal sonore dans le modèle de séparation de parole ; et
la prédiction d'un signal de parole propre compris dans le signal sonore via le modèle de séparation de parole, et la délivrance du signal de parole propre dans le signal sonore.

10. Appareil pour le traitement d'un signal sonore, comprenant : une pluralité de modules destinés chacun à réaliser une étape d'un procédé selon l'une quelconque des revendications 1 à 9.

11. Dispositif informatique, comprenant :

au moins un processeur ; et
au moins une mémoire stockant au moins un programme informatique ;
dans lequel l'au moins un programme informatique lorsqu'il est chargé par l'au moins un processeur est configuré pour mettre en oeuvre un procédé selon l'une quelconque des revendications 1 à 9.

12. Support de stockage lisible par ordinateur, stockant au moins un programme informatique, dans lequel l'au moins un programme informatique, lorsqu'il est chargé par un ou plusieurs processeurs, est configuré pour mettre en oeuvre un procédé selon l'une quelconque des revendications 1 à 9.

**Figure 1**

**Figure 2**

Input, in each iteration, a mixed speech signal which serves as a training sample into a student model and into a teacher model, where the student model outputs a first clean speech signal and a first interfering signal through processing the mixed speech signal, and the teacher model outputs a second clean speech signal and a second interfering signal through processing the mixed speech signal — 301

Determine correctness information of said iteration based on the first clean speech signal outputted by the student model and the clean speech signal based on which the mixed speech signal is generated, wherein he correctness information is configured to represent a degree of separation correctness of the student model — 302

Determine consistency information of said iteration based on the first clean speech signal outputted by the student model and the second clean speech signal outputted by the teacher model, where the consistency information is configured to represent a degree of consistency between a separation capability of the student model and a separation capability of the teacher model — 303

Adjust a model parameter of the student model and a model parameter of the teacher model based on the correctness information and the consistency information determined in each iteration, until a training-terminating condition is satisfied, and output the student model determined in an iteration which satisfies the training-terminating condition, as a speech separation model — 304

**Figure 3**

A computer device maps a mixed speech signal into a high-dimensional vector space to obtain an embedded matrix corresponding to the mixed speech signal ⌐401

The computer device extracts an abstract feature from the embedded matrix corresponding to the mixed speech signal ⌐402

The computer device performs signal reconstruction based on the extracted abstract feature, the inputted mixed speech signal, and an output of the encoder to obtain a first clean speech signal ⌐403

**Figure 4**

X → Encoder → v → Abstract feature extractor → c → Signal reconstruction module → Predict a speech signal

501    502    503

**Figure 5**

Obtains a sound signal on which the speech separation is to be performed — 601

Input the sound signal into a speech separation model, where the speech separation model is obtained based on a mixed speech signal and cooperative iterative training between a student model and a teacher model, and a model parameter of the teacher model is configured based on a model parameter of the student model — 602

Predicts a clean speech signal included in the sound signal through the speech separation model, and output the clean speech signal in the sound signal — 603

**Figure 6**

Apparatus for training speech separation model

Training module — 701

Accuracy determining module — 702

Consistency determining module — 703

Adjusting module — 704

**Figure 7**

Apparatus for speech separation

Signal obtaining module — 801

Input module — 802

Prediction module — 803

**Figure 8**

900

Server

Processor — 901

Memory — 902

**Figure 9**

**FIG. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010003201

**Non-patent literature cited in the description**

- Mixup-breakdown: a consistency training method for improving generalization of speech separation models. **MAX W Y LAM et al.** ARXIV.ORG. CORNELL UNIVERSITY LIBRARY, 201 OLIN LIBRARY CORNELL UNIVERSITY ITHACA, 28 October 2019